# EUROPÄISCHE PATENTSCHRIFT

(11) **EP 0 833 762 B1**
(45) Veröffentlichungstag und Bekanntmachung des Hinweises auf die Patenterteilung: **11.08.1999**
(21) Anmeldenummer: 96916277.5
(22) Anmeldetag: 24.06.1996
(51) Int. Cl.: B60R 11/02, H04M 1/60

(54) **TELEFONGERÄT MIT EINEM EINE SPRECH- UND/ODER HÖRMUSCHEL AUFWEISENDEN HANDAPPARAT**
TELEPHONE SET WITH A HANDSET HAVING A MOUTHPIECE AND/OR AN EARPIECE
APPAREIL DE TELEPHONE AVEC COMBINE POURVU D'UN ECOUTEUR ET/OU D'UN MICROPHONE

(30) Priorität: 23.06.1995 CH 184395; 05.01.1996 AT 796 U; 05.03.1996 CH 57596; 14.03.1996 CH 67896; 14.03.1996 CH 67996; 15.05.1996 CH 123696
(43) Veröffentlichungstag der Anmeldung: 08.04.1998
(73) Patentinhaber: Peiker, Andreas, 61381 Friedrichsdorf/Ts (DE)
(72) Erfinder: Peiker, Andreas, 61381 Friedrichsdorf/Ts (DE)
(74) Vertreter: Roshardt, Werner Alfred, Dipl.-Phys.
(86) Internationale Anmeldenummer: IB9600606
(87) Internationale Veröffentlichungsnummer: WO9700792

(56) Entgegenhaltungen:
- EP-A- 0 617 535
- WO-A-94/22234
- DE-A- 4 015 091
- DE-U- 8 807 334
- GB-A- 2 286 744
- US-A- 3 632 158
- US-A- 4 647 722
- US-A- 5 282 246
- US-A- 5 463 688
- PATENT ABSTRACTS OF JAPAN vol. 950, no. 2 & JP,A,07 032951 (MATSUSHITA TOMOYOSHI), 3.Februar 1995,

## Beschreibung

Telefongeräte in einen Kraftfahrzeug existieren in unterschiedlichsten Varianten.

Aus der WO-A-94 22 234 ist ein Telefongerät mit einer ein Mikrofon und eine Hörkapsel aufweisenden Halterung bekannt. Die Halterung war an Wänden oder Auflagen fest montierbar. Sie hatte einen Platz zur Aufnahme und elektrischen Ankopplung eines von Ihr entfernbaren, ebenfalls ein Mikrofon und eine Hörkapsel aufweisenden Handfunktelefons.

Aus dem deutschen Gebrauchsmuster G 93 11 294.7 ist eine Haltevorrichtung für ein transportables Mobiltelefon bekannt, welche im wesentlichen aus zwei sich gegenüberliegenden Seitenwänden und einer diese verbindende Bodenplatte aufgebaut ist. Das Mobiltelefon wird zwischen die Seitenwände eingebracht und liegt auf der Bodenplatte auf. Es wird aufgrund einer form- oder kraftschlüssigen Verbindung festgehalten. Die Halterung wird Z. B. an der Seitenwand einer Mittelkonsole zwischen Fahrer- und Beifahrerplatz innerhalb der Kraftfahrzeugs festgeschraubt.

Aus der EP 0 545 670 A2 ist eine Halterung für ein Mobilfunktelefon bekannt, welche aus zwei ineinander verschachtelten Teilen besteht. Der äußere Teil wird fest an einer Unterlage angeschraubt. Der innere Teil stellt eine Art Wippe dar, in welcher das Handfunktelefon von vorne einsetzbar ist. Die Wippe ist um eine horizontale Achse kippbar. In einer vorderen Position ist die Wippe zur Aufnahme des Geräts bereit. Beim nach hinten Kippen wird sie von einem rastenden Mechanismus festgehalten. Der Mechanismus wird durch einen an der Unterseite der Wippe angeordneten, durch Herunterdrücken des Handfunktelefons in der Halterung betätigbaren Hebel gelöst.

Im deutschen Gebrauchsmuster G 93 11 242.4 ist eine zweiteilige Halterung für ein Handfunktelefon beschrieben. Es wird hier am Handfunktelefon ein eigenständiger Clippteil befestigt, welcher eine Zunge aufweist, die in einen entsprechenden Schlitz der Halterung einschiebbar ist. Weiter ist ein HF-Abschirm- und Antennenteil offenbart, der mit einem Koaxialkabel mit einem bordeigenen Antennensystem des Kraftfahrzeugs verbunden ist. Der Antennenteil verfügt über eine Ankopplung an den Antennenteil des mobilen Telefons im Sinn einer galvanischen Verbindung zwischen dem Antennenteil des Handfunktelefons und der Bordantenne des Fahrzeugs. Verfügt das Handfunktelefon über Freisprechmöglichkeiten, so kann es zum Telefonieren in der Halterung belassen werden. Ist kein Mithören durch Drittpersonen im Fahrzeug erwünscht, so kann das Funktelefon der Halterung entnommen werden, so daß der Benutzer mit der Hörmuschel am Ohr telefonieren kann. Das Handfunktelefon ist in beiden Fällen jeweils über eine Antennenleitung mit der Bordantenne des Fahrzeugs verbunden. Soll das Telefon außerhalb des Fahrzeugs verwendet werden, werden Clippteil und Abschirm- resp. Antennenteil entfernt.

Eine Möglichkeit zum Freihandtelefonieren mit einem Handfunktelefon ist z. B. aus der EP 0 464 011 A1 bekannt. Es wird vorgeschlagen, einen Adapter, welcher mit einem Lautsprecher und einem Mikrofon verbunden ist, an einen entsprechenden Stecker des Handfunktelefons anzuschließen. Externes Mikrofon und externer Lautsprecher ersetzen dabei vorübergehend die im Handfunktelefon integrierten.

Aufgabe der Erfindung ist es, ein Funkgerät zu schaffen, welches eine Einrichtung zur Aufnahme eines Handfunktelefons hat, die im weitesten Sinn als Halterung brauchbar ist. Die Einrichtung soll sich insbesondere für den Einbau und die Anwendung in der Kabine eines Kraftfahrzeugs eignen. Ferner soll sie einfach und bequem in der Handhabung sein.

Die erfindungsgemäße Lösung der Aufgabe ist Gegenstand des Patentanspruchs 1. Bevorzugte Ausführungsarten sind in den abhängigen Patentansprüchen umschrieben.

Vorzugsweise ist der Handapparat durch eine an einer Konsole befestigbare und mit ihr elektrisch verbundene Handschale gebildet, in welche das Handfunktelefon (vorzugsweise ein sog. Handy) unter elektrischer Ankopplung einsetzbar ist.

Die Handschale ist ein Zwischenteil, der über ein Kabel mit der Konsole und infolgedessen mit der bordeigenen Antenne verbunden ist. Sie stellt quasi eine "Telefonhülse" dar, in welcher das Handfunktelefon als Funktionseinheit einsetzbar ist.

Vorzugsweise weist die Handschale eine Sprech- und/oder eine Hörmuschel auf, welche elektrisch mit einem im Handfunktelefon integrierten Telefonieschaltkreis verbindbar sind, um an die Stelle im Handfunktelefon vorgesehener Sprech- und Hörmuscheln zu treten. Die Handschale ist also in der Art eines Telefonhörers ausgebildet, der über eine Telefonschnur mit der Konsole verbunden ist. Der Telefonieschaltkreis (der dafür verantwortlich ist, daß mit einer Amtszentrale Verbindung aufgenommen werden kann und daß ein Teilnehmer über seine offizielle Nummer erreicht werden kann) wird vom einzusetzenden Handfunktelefon zur Verfügung gestellt. D. h., Handschale und Konsole stellen quasi eine "Hülle" dar, die mit dem Handfunktelefon "zu füllen" ist.

In einer bevorzugten Ausführungsart befindet sich in dem ausschwenkbaren, köcherartig ausgebildeten Einsteckteil der Handschale wenigstens eine Krageinheit, auf der im eingeschwenkten Zustand der Unterteil eines Handfunktelefons ruht. Beim Aufschwenken um eine den Einsteckteil haltende Schwenkachse wird der vordere (Köcher-)Randbreich nach vorne und auch nach unten in einer Relativbewegung zur bevorzugt feststehenden Krageinheit bewegt. Hierdurch ist das Handfunktelefon leicht entnehmbar. Die Krageinheit wirkt als "Auswerfer". Der Unterteil des Handfunktelefons wird relativ nach vorne und oben verschoben, ist aber seitlich noch gehalten. Beim Herausnehmen kann aber kein Verklemmen mehr mit den Köcherseitenwänden erfolgen. Die Köcherwände können somit nicht mehr beschädigt, insbesondere deren oberer Rand nicht ausgebrochen werden.

Bevorzugt wird die Rückwand des Einsteckteils über die Köcheroberkante hinausgezogen, d. h. nach oben verlängert. Diese Verlängerung dient als Führungsplatte für das einzuschiebende Handfunktelefon.

Die Handschale kann ein Interface zur energetischen Versorgung des Handfunktelefons sowie zur Signalübertragung insbesondere von Antennensignalen aufweisen. D. h., das Handfunktelefon sendet und empfängt nicht mit der eigenen, sondern mit der Bordantenne des Fahrzeugs Signale der Fernmeldestation. Die eigene Antenne dient nur zur Signalübermittlung bis zur bordeigenen Sende-/Empfangseinheit. Selbstverständlich braucht die Konsole nicht über eine Antenne zu verfügen. Das Handfunktelefon hat in jedem Fall die eigene Antenne zur Verfügung. Das Interface wird bevorzugt zur galvanischen, auftrennbaren Kopplung (Übertragung) ausgelegt. Es kann auch eine induktive, optische, ... Übertragung insbesondere der Fernmeldesignale verwendet werden. Ferner ist auch denkbar, daß die Konsole ortsfest ist und mit einer konventionellen oder digitalen Drahtleitung an einer Amtszentrale angeschlossen ist.

Die Handschale braucht mit der Konsole nicht zwingend über ein Kabel verbunden sein. Denkbar ist auch, daß die Handschale als mobiler Teil eines schnurlosen Telefons ausgeführt ist.

Vorzugsweise verfügt die Handschale über eine derart gestaltete Ausnehmung für das Handfunktelefon, daß letzteres ein integrierter Bestandteil der Handschale ist bzw. als solcher erscheint und nicht aus dieser herausragt. Die Handschale ist also von der Form her größer als das Handfunktelefon. Bei herausgenommenem Mobilfunktelefon sieht die Handschale so aus, wie wenn ein entsprechender Teil aus ihr "herausgeschnitten" worden wäre.

Die Handschale kann im Sinn eines konventionellen Telefonhörers bogenförmig gekrümmt sein, wobei Hör- und Sprechmuschel an einer Innenseite des bogenförmig gekrümmten Telefonhörers angeordnet sind und die Ausnehmung für das Handfunktelefon so gestaltet ist, daß eine Tastatur des Handfunktelefons von einer Außenseite (resp. von der der Sprech- und Hörmuschelseite gegenüberliegenden Seite) zugänglich ist.

Bevorzugt wird die Halteeinheit mit einer Ausstelleinheit versehen, welche das Handfunktelefon nach der Entriegelung in eine leicht zu ergreifende Position bringt.

In einer weiteren Ausführungsvariante ist die Halteeinheit derart gestaltet, daS sie nur eine einzige Feder für die Ausstelleinheit und lediglich nur eine einzige weitere Feder für den Verriegelungs- und Entriegelungsmechanismus benötigt. Die gesamte Halteeinheit mit Ent- und Verriegelung ist in den Boden der das Handfunktelefon aufnehmenden Schale integriert. D. h. diese mechanischen Teile sind derart ausgebildet, daß sie nur eine geringe Dicke aufweisen.

Für einen Freisprechbetrieb ist es besonders vorteilhaft, wenn Handschale und Konsole so ausgebildet sind, daß bei auf der Konsole aufgesetzter Handschale die Tastatur des Handfunktelefons zugänglich ist. Die Handschale muß also zum Telefonieren nicht von der Konsole weggenommen werden.

Vorteilhaft ist es, wenn die Handschale selbst über ein Freisprechmikrofon verfügt. Eine Schaltung sorgt dafür, daß beim Einsetzen des Handfunktelefons in die Handschale automatisch von der Handfunktelefon-eigenen Hör- und Sprecheinrichtung auf diejenige der Handschale umgeschaltet wird. Diese Schaltung kann z. B. durch einen beim Einsetzen des Handfunktelefons in die Handschale automatisch betätigten mechanischen oder elektrischen Fühler aktiviert werden. Das Umschalten kann auch manuell erfolgen.

Die Handschale weist für das Handfunktelefon z. B. eine durchgehende Ausnehmung auf; die der Handschale bei herausgenommenem Handfunktelefon ein ringförmiges Aussehen gibt.

Die Konsole selbst hat z. B. eine Außenform von der Art eines Kreissegments, wobei die Handschale auf eine Sekantenfläche des Kreissegments aufsetzbar ist. Die Konsole sieht z. B. wie ein halbierter Käselaib aus.

Die Handschale wird in einer bevorzugten Ausführungsart mit einem ausklappbaren Einsteckteil für das Handfunktelefon ausgestattet. Hierdurch ist ein besonders bedienerfreundliches Einstecken und Herausnehmen des Handfunktelefons gewährleistet. Das Einstecken kann auch noch dadurch verbessert werden, daß der Einsteckteil in seinem etwa um 10° bis 20° herausgeklappten Zustand arretiert verbleibt. Diese herausgeklappte Position wird bevorzugt federbelastet gehalten, um ein Schwingen bzw. Klappern, hervorgerufen durch Fahrzeugschwingungen und -erschütterungen, zu vermeiden. Das Einsteckteil ist in einer weiteren bevorzugten Ausführungsvariante köcherartig ausgebildet, wobei die Köcherrückwand über den Köcherrand nach oben gezogen ist. Dieser nach oben gezogene Teil der Köcherrückwand dient als Führungsschiene für das in die Köcheröffnung teilweise einzusteckende Handfunktelefon. Die Führungsschiene kann nun mit dem Einsteckteil nach vorne geklappt werden oder auch in einer festen Position verbleiben. Die Schwenkachse zum Herausklappen verläuft annähernd senkrecht zur Köcherlängsachse. Sie kann nun im Bereich des Köchers als auch oberhalb von diesem angeordnet sein.

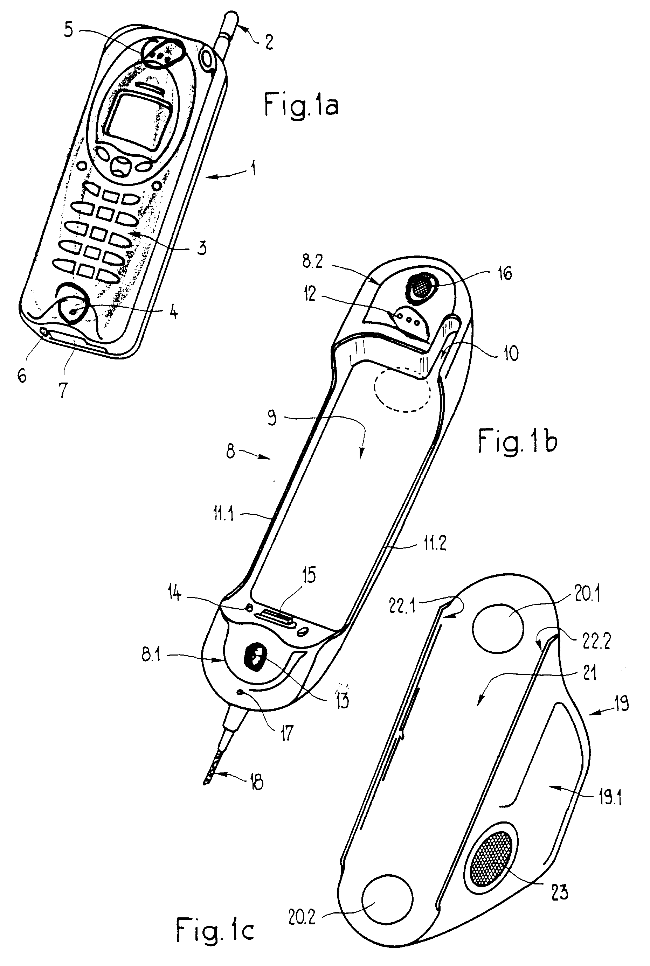

Die Handschale kann nun, wie in den Figuren 1 bis 4 dargestellt ist, im Sinne einer das Handfunktelefon aufnehmenden Schale geformt sein. Sie kann aber auch hantelförmig mit einer Aufnahme für den oberen und den unteren Teil des Handfunktelefons sowie einer schmalen Verbindungsstrebe zwischen diesen beiden Teilen ausgebildet sein. Diese Ausbildung reduziert die Gesamtbreite vom in die "Handschale" eingelegten Handfunktelefon; was insbesondere für telefonierende Frauen mit zarten, schmalen Handchen von Vorteil sein sollte. Die Verbindungsstrebe kann nun ergonomisch gebogen ausgebildet werden.

Ein Lautsprecher der Konsole für das Freisprechen ist an der flachen Kreissegmentfläche vorgesehen. Ein Freisprechmikrofon ist an einer geeigneten Stelle zu plazieren, so daß es auf den Kraftfahrzeuglenker ausgerichtet ist.

Zum Halten der Handschale auf der Konsole sind Magnethalter bevorzugt. Klemm, Clip-, oder Hakenbefestigungen sind jedoch auch möglich.

Sowohl Handschale als auch Handfunktelefon werden via Konsole mit Strom versorgt. Der Strom kann zum Speisen oder zum Laden eines Akkumulators des Handfunktelefons verwendet werden.

Weitere vorteilhafte Ausführungsbeispiele und Merkmalskombinationen ergeben sich aus der nachfolgenden Detailbeschreibung und der Gesamtheit der Patentansprüche.

Die zur Erläuterung der Ausführungsbeispiele verwendeten Zeichnungen zeigen:
- Fig. 1a-c: Schematische Darstellungen eines Telefongeräts mit einem Handfunktelefon, einer Handschale und einer Konsole;
- Fig. 2a-c: schematische Darstellungen eines Telefongeräts mit einem Handfunktelefon, einer eine durchgehende Ausnehmung für das Handfunktelefon aufweisenden Handschale und einer Konsole, wobei die in den **Figuren 2b** und **2c** dargestellte Handschale sowie das Handfunktelefon gegenüber der in **Figur 2a** gezeigten Lage um 180° um ihre Längsachse geschwenkt wird;
- Fig. 3a-c: schematische Darstellungen eines Handfunktelefons in einer Handschale, wobei die Handschale nur eine Sprechmuschel aufweist und in **Figur 3b** die Handschale gegenüber ihrer Darstellung in **Figur 3a** um 180° um ihre Längsachse gezeigt ist;
- Fig. 4a-d: eine Variante zu den in den **Figuren 1 bis 3** dargestellten Telefongeräten mit einem ausklappbaren Einsteckteil für das Handfunktelefon als Teil der Handschale, wobei

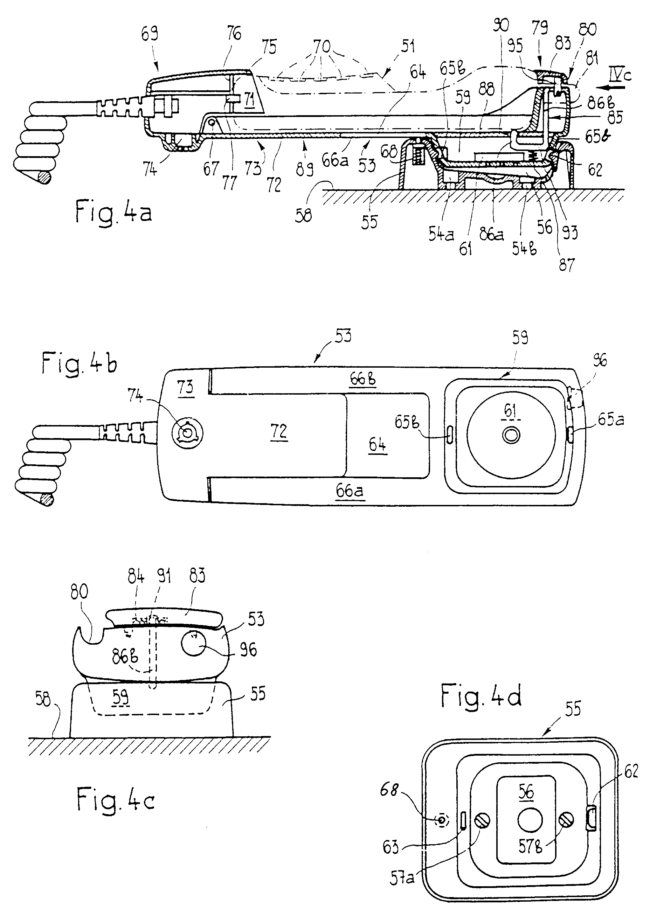

**Figur 4a** einen Längsschnitt durch Handschale und Konsole mit gestrichelt, nicht geschnitten dargestelltem Handfunktelefon,
**Figur 4b** eine Rückansicht der Handschale,
**Figur 4c** eine Seitenansicht auf die in die Konsole eingelegte Handschale ohne Handfunktelefon in der in **Figur 4a** gezeigten Blickrichtung IVc und
**Figur 4d** eine Draufsicht auf die Konsole zeigen.

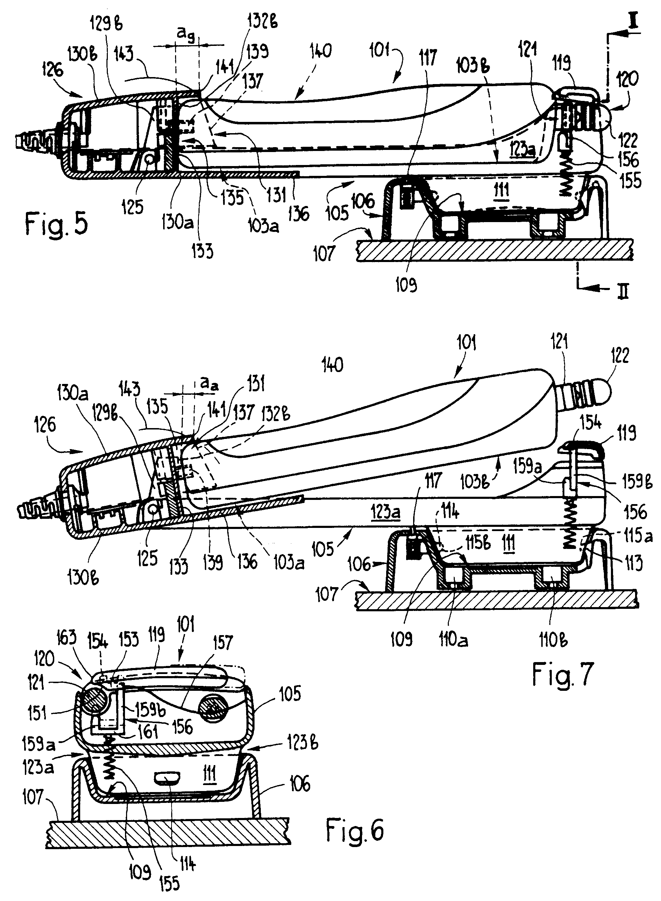

- Fig. 5: eine Seitenansicht eines Telefongeräts, wobei die das Handfunktelefon aufnehmende, als Basisteil ausgebildete Handschale im Längsschnitt dargestellt ist; der Basisteil ist in einer im Längsschnitt dargestellten Halterung gehalten;
- Fig. 6: einen Querschnitt entlang der Linie II - II in **Figur 5** (die gestrichelte Stellung des Schiebers wird bei herausgenommenen Handfunktelefon des Telefongeräts eingenommem);
- Fig. 7: einen Längsschnitt analog **Figur 5**, jedoch mit freigegebenem, nach vorne geschwenktem und leicht nach oben geschobenem Handfunktelefon;

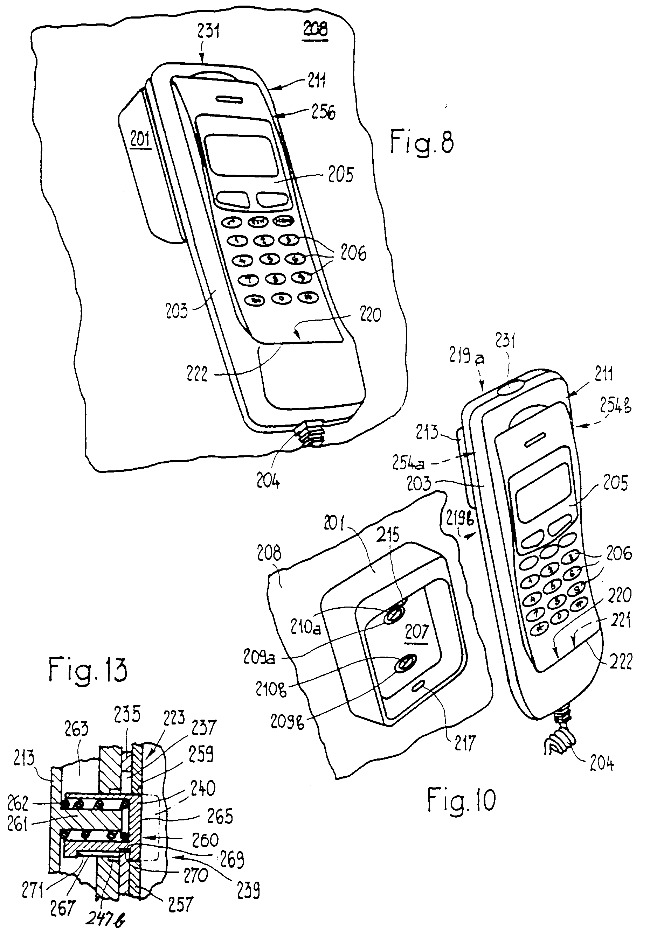

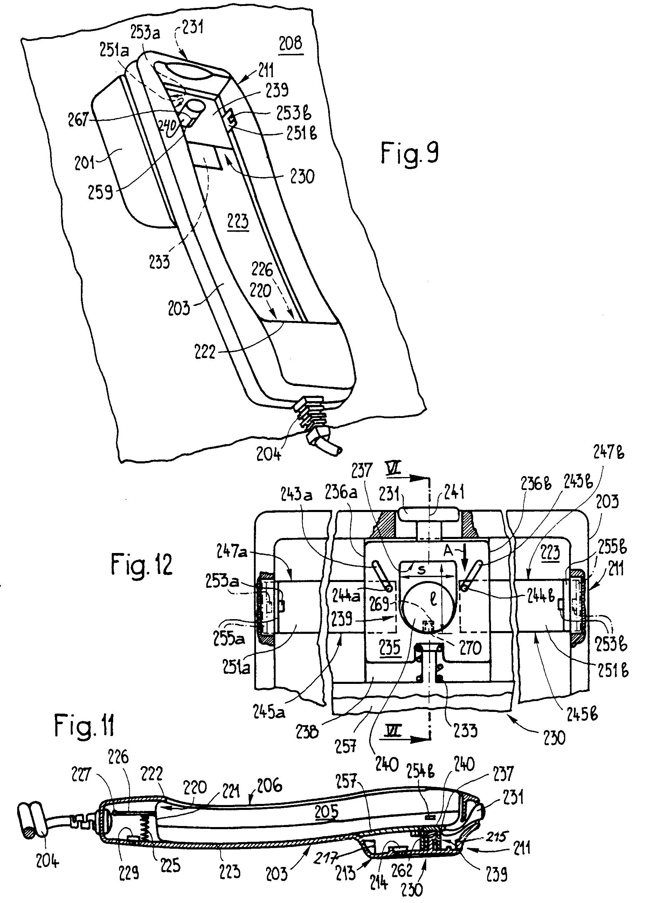

- Fig. 8: eine perspektivische Draufsicht auf ein Telefongerät mit einer Konsole zur Halterung an einer Oberfläche und einem als Handy ausgebildeten in einer Schale herausnehmbar gehaltenen Handfunktelefon;
- Fig. 9: eine perspektivische Draufsicht auf das in **Figur 8** dargestellte Telefongerät, wobei hier das Handfunktelefon entnommen ist,
- Fig. 10: eine perspektivische Draufsicht auf das in **Figur 8** dargestellte Telefongerät, wobei hier die Handschale mit Handfunktelefon aus der Konsole entnommen dargestellt ist;
- Fig. 11: einen mittigen Längsschnitt durch das in **Figur 8** dargestellte Telefongerät;
- Fig. 12: eine Draufsicht auf eine Halteeinheit im oberen Bereich der Schale zur Halterung des Handfunktelefons in gegenüber den **Figuren 8** bis **11** vergrößerter Darstellung;
- Fig. 13: einen Querschnitt durch die in **Figur 12** dargestellte Halteeinheit entlang der Linie VI - VI in **Figur 12** und

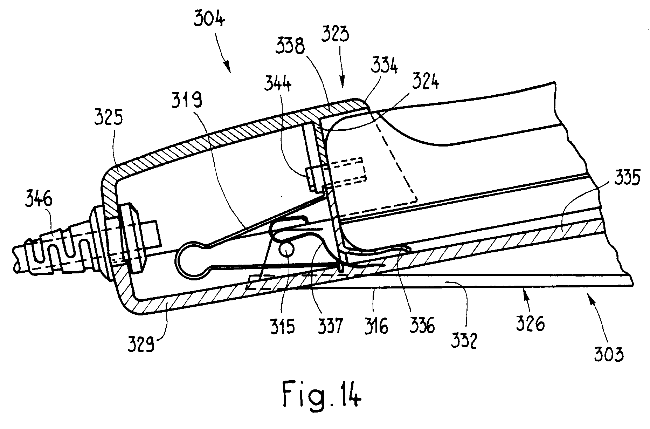

- Fig. 14: einen Längsschnitt durch eine Variante eines Einsteckteils, in das ein Handfunktelefon entnehmbar in ausgeschwenkter Lage gezeigt ist.

**Figur 1a** zeigt eine schematische perspektivische Darstellung eines Handfunktelefons **1**. Dieses ist von vorne betrachtet rechteckig und hat eine relativ geringe Dicke. An einem oberen Ende ist eine Antenne **2** vorgesehen. An einer unteren Stirnseite befinden sich als Teil eines lösbaren Interfaces ein Netzanschluß **6** und ein Stecker **7**. Über den Netzanschluß **6** ist das Handfunktelefon **1** mit Strom versorgbar. Verfügt das Handfunktelefon **1** über einen Akkumulator, so kann dieser via Netzanschluß **6** aufgeladen werden. Die Funktion des Steckers **7** wird weiter unten erläutert.

In üblicher Weise verfügt das Handfunktelefon über eine Tastatur **3**, ein Mikrofon **4** (als Sprechmuschel) und eine Hörmuschel **5**.

Das Handfunktelefon **1** ist gemäß der Erfindung in eine Handschale **8** einfügbar, wie sie z. B. in **Figur 1b** schematisch dargestellt ist. Die Handschale **8** ist z. B. in der Art eines großzügigen Telefonhörers ausgeführt. Sie verfügt über eine Ausnehmung **9** für den rechteckigen (bzw. quader- oder plattenförmigen) Körper des Handfunktelefons sowie eine Ausnehmung **10** für die Antenne **2**. Die Handschale **8** ist nur geringfügig breiter als das Handfunktelefon **1**. An den Längsseiten der Ausnehmung **9** sind zwei schmale Seitenwände **11.1** und **11.2** vorgesehen. Sie decken die längsseitigen Seitenwände des Handfunktelefons **1** nicht vollständig ab, so daß das Handfunktelefon **1** leicht aus der Ausnehmung **9** herausgenommen werden kann.

Am unteren Ende der Ausnehmung **9** weist die Handschale **8** einen Sprechmuschelteil **8.1** mit einem Mikrofon **13** auf. An seiner an die Ausnehmung **9** angrenzenden Seitenwand sind ein Stromversorgungskontakt **14** und als weiterer Teil des Interfaces ein Stecker **15** als ankuppelbares Gegenstück zum Netzanschluß **6** und zum Stecker **7** des Handfunktelefons **1** vorgesehen.

Eine Anzeigediode **17** am unteren Ende des Sprechmuschelteils **8.1** zeigt z. B. an, ob die Handschale in Betrieb ist oder nicht. Ferner verfügt der Sprechmuschelteil **8.1** über ein Kabel **18**, welches die Handschale **8** mit einer Konsole gemäß **Figur 1c** resp. einer Bordantenne des Fahrzeugs verbindet.

Am oberen Ende der Handschale **8** ist ein Hörmuschelteil **8.2** mit einer Hörmuschel **12**, einer Ausnehmung **10** für die Antenne **2** und mit einem Freisprechmikrofon **16** vorgesehen.

Der Stecker **15** erlaubt eine elektrische Kopplung des Handfunktelefons **1** und der Handschale **8**. Insbesondere sind über den Stecker **15** das Mikrofon **13** und der Lautsprecher der Hörmuschel **12** kontaktierbar. Eine im Handfunktelefon **1** integrierte Schaltung schaltet beim Einsetzen des Handfunktelefons **1** in die Handschale **8** automatisch vom eigenem Mikrofon **4** bzw. von der eigenen Hörmuschel **5** auf die entsprechenden Teile **13** und **12** der Handschale **8** um. Das Umschalten kann auch durch Betätigen einer am Handfunktelefon vorgesehenen Taste erfolgen. Weiter kann ein Antennensignal über den Stecker **15** abgegriffen bzw. eingespiesen werden. Die Signal- und/oder die Energieübertragung für das Handfunktelefon **1** kann nun, wie oben beschrieben, auf galvanischem Wege erfolgen; es ist aber auch eine induktive sowie auch eine optische Übertragung, insbesondere der Fernsprechsignale möglich.

Denkbar ist jedoch auch, daß im Hörmuscheleteil **8.2** im Bereich der Ausnehmung **10** ein induktiver Abgriff des Signals erfolgt. Um Übertragungsstörungen zu vermeiden, ist darauf zu achten, daß nicht gleichzeitig über die Bordantenne (der Konsole) und über die Antenne **2** des Handfunktelefons **1** gesendet wird.

Das Handfunktelefon **1** wird von vorne in die Ausnehmung **9** eingelegt, wobei zunächst der Stecker **7** des Handfunktelefons in den Stecker **15** eingeführt wird. Im übrigen ist die Ausnehmung vorzugsweise so gestaltet, daß beim Einfügen des Handfunktelefons **1** ein Rastwiderstand überwunden werden muß, so daß das Handfunktelefon **1** form- und kraftschüssig in der Handschale **8** festgehalten ist. Weiter kann es vorteilhaft sein, einen Auswurfmechanismus vorzusehen. Ein solcher umfaßt beispielsweise eine Taste, die an der Außenseite der Handschale **8** betätigbar ist und einen Auswurfhebel betätigt, welcher das Handfunktelefon **1** aus der Ausnehmung **9** herausdrückt.

Über das Kabel **18** ist die Handschale (in nicht näher dargestellter Weise) mit einer Konsole **19** gemäß **Figur 1c** verbunden. Letztere verfügt über eine Auflagefläche **21** mit zwei Magnethaltern **20.1, 20.2** und zwei längsseitigen Schienen **22.1, 22.2**. Die Schienen stellen die korrekte Justierung der Handschale **8** auf der Konsole **19** sicher. Auf der in **Figur 1b** nicht sichtbaren Rückseite der Handschale **8** sind die den Magnethaltern **20.1, 20.2** entsprechenden magnetisierbaren Teile angeordnet.

Die trapezförmige Konsole **19** verfügt an ihrer zur Auflagefläche **21** senkrechten Seitenfläche **19.1** über einen Lautsprecher **23** für den Freisprechbetrieb.

Die Konsole **19** und die Handschale **8** sind aufeinander und auf das Handfunktelefon **1** formmäßig wie folgt abgestimmt: Die Länge und die Breite der Auflagefläche **21** entsprechen im wesentlichen der Länge und der Breite der Handschale **8**, namentlich deren in **Figur 1b** nicht sichtbaren Rückseite. Die Handschale **8** stellt also eine kontinuierliche Fortsetzung der Außenform der Konsole **19** dar. In ähnlicher Weise paßt das Handfunktelefon **1** in die Handschale **8**. Ersteres ragt also formmäßig nicht aus letzterer heraus.

Bei der in den **Figuren 1a-c** gezeigten Ausführungsform sind sowohl die Tastatur **3** des Handfunktelefons **1** als auch Mikrofon und Lautsprecher von Sprech- bzw. Hörmuschel der Handschale **8** nach oben (d. h. von der Konsole weg) gerichtet, wenn das Handfunktelefon **1** mit der Handschale **8** auf der Konsole **19** aufgesetzt ist.

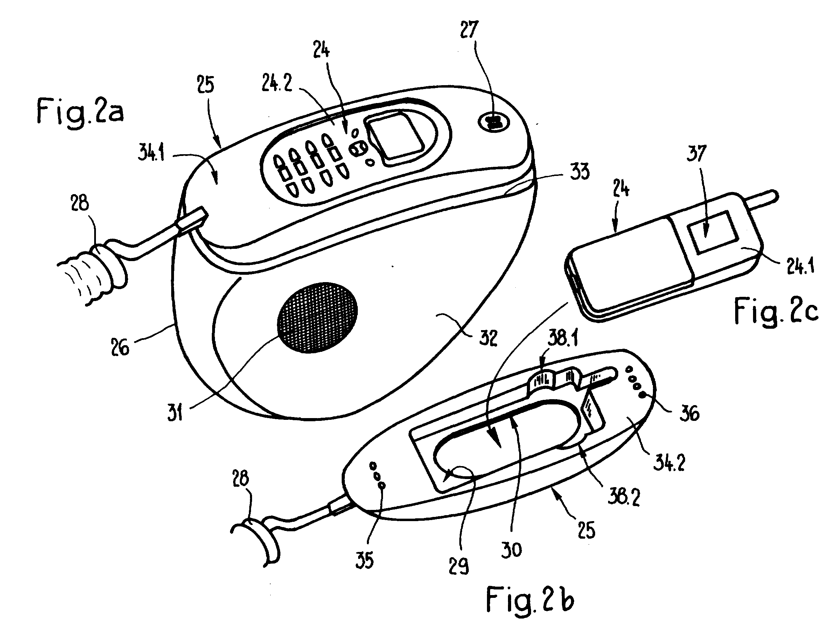

Eine andere Ausführungsvariante ist in den **Figuren 2a** bis **2c** dargestellt.

Ein Handfunktelefon **24** ist dabei in eine leicht bogenförmig gekrümmte Handschale **24** einstzbar. Die Handschale **25** weist zu diesem Zweck eine Vertiefung **29** an seiner Innenfläche **34.2** auf. Bei eingesetztem Handfunktelefon **24** ist dessen Rückseite **24.1** im wesentlichen bündig mit der Innenfläche **34.2** der Handschale **25**. Weiter sind an der Innenseite **34.2** am einen Ende ein Mikrofon **35** and am anderen Ende eine Hörmuschel **36** ausgebildet.

Die Vertiefung **29** verfügt über eine langgezogene Öffnung **30**, welche eine Vorderseite **24.2** des in der Handschale **25** eingesetzten Handfunktelefons **24** freigibt. Ein Kabel **28** ("Telefonschnur") verbindet die Handschale **25** mit einer Konsole **26**. Das Kabel **28** ist vom unteren Ende der Handschale weggeführt.

Wie in **Figur 2a** zu erkennen ist, verfügt die konvex gekrümmte Außenfläche **34.1** der Handschale **25** über ein Freisprechmikrofon **27**, welches im vorliegenden Beispiel am oberen Ende angeordnet ist.

Ein für das Freisprechen erforderlicher Außenlautsprecher **31** ist an einer Seitenfläche **32** der kreissegmentartigen Konsole **26** vorgesehen.

Die Handschale **25** ist auf eine sog. Sekantenfläche **33** der Konsole **26** aufsetzbar. (Betrachtet man die Konsole **26** von der Seite, so hat sie das Aussehen eines Kreissegments. Unter der Sekantenfläche wird nun diejenige Stirnseite der Konsole verstanden, welche als Randbegrenzung die "projizierte" Sekante hat, d. h. nicht die kreisbogenförmig gekrümmte, sondern die im wesentlichen gerade Fläche.) Die Innenfläche **34.2** der Handschale **25** zeigt gegen die Konsole **26**. Ein an der Rückseite **24.1** des Handfunktelefons **24** ausgebildeter Befestigungsteil **37** (z.B. Clipteil) kann im Eingriff mit einem (in den Figuren nicht näher dargestellten) entsprechenden Befestigungsteil an der Sekantenfläche **33** der Konsole **26** fixiert werden. Vorzugsweise ist jedoch auch die Handschale **25** unabhängig vom Handfunkteleon **24** an der Konsole **26** fixierbar.

Dadurch, daß die Handschale **25** das Handfunktelefon **24** ringförmig einfaßt, ist letzteres sowohl von der Vorderseite **24.2** als auch von der Rückseite **24.1** her zugänglich. Insbesondere ist die Tastatur des Handfunktelefons **24** frei zugänglich, wenn es mit der Handschale **25** auf der Konsole **26** fixiert ist. Wie im Ausführungsbeispiel gemäß der **Figuren 1a** bis **1c** ist das Handfunktelefon **24** vorzugsweise rastend in der Handschale **25** festgehalten. Aufgrund der Öffnung **30** und allfälliger seitlicher Ausnehmungen **38.1, 38.2** (an den längsseitigen Seitenwänden der Vertiefung 29) ist das Handfunktelefon **24** leicht aus der Handschale **25** herausnehmbar.

Das Handfunktelefon kann nun in einer bevorzugten Ausführungsform ebenfalls ein Mikrofon sowie eine Hörmuschel aufweisen, auf die jedoch in einer vereinfachten Ausführungsform verzichtet wird.

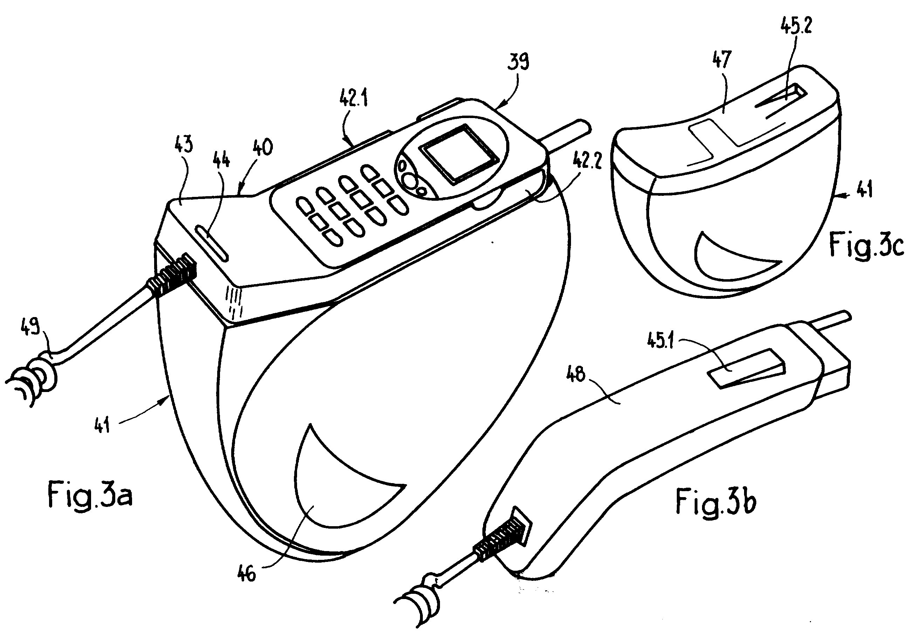

Eine dritte Variante ist in den **Figuren 3a** bis **3c** dargestellt.

Mit der Bezugszahl **39** ist wiederum ein Handfunktelefon bezeichnet. Dieses ist in eine Handschale **40** einfügbar, welche vorne und oben offen ist. Das Handfunktelefon **39** wird zwischen zwei Seitenführungen **42.1** und **42.2** festgehalten.

Ein leicht abgewinkelter Fußteil **43** der Handschale **40** enthält die elektrischen bzw. elektronischen Komponenten, die zum Anschließen bzw. Betreiben des Handfunktelefons **39** in der Handschale **40** erforderlich sind. Dazu gehört im vorliegenden Beispiel insbesondere ein Mikrofon **44**. Vom Fußteil **43** ist ferner ein Spiralkabel **49** weggeführt.

Die Konsole **41** hat die Form eines angeschnittenen Käselaibs. Eine Sekantenfläche **47** (welche gleichsam die abgeschnittene Seite des Käselaibs darstellt) ist mit einer Rastbefestigung **45.2** ausgestattet. Diese korrespondiert mit einer Rastbefestigung **45.1** an einer Rückseite **48** der Handschale **40**.

Auf einer Seiten- bzw. Hauptfläche der Konsole **41** ist eine halbmondförmige Lautsprecheröffnung **46** vorgesehen.

Um ein Wenden der Handschale **40** um ihre Längsachse für den Telefonierbetrieb zu vermeiden, kann auch eine "dachfirstartige" Ausgestaltung vorgenommen werden, wobei dann auf der Innenseite bevorzugt ein weiteres Mikrofon sowie auch eine Hörmuschel vorgesehen sind, welche beim Abheben aktiviert werden.

Eine vierte Ausführungsvariante zeigen die **Figuren 4a** bis **4d**. Mit dem Bezugszeichen **51** ist wiederum ein Handfunktelefon bezeichnet, welches in eine Handschale **53** einfügbar ist. Die Handschale **53** ist an einer Konsole **55** abnehmbar gehalten. Beide Teile **53** und **55** sind aus Kunststoff in einem Spritzgußverfahren hergestellt.

Die Konsole **55** ist annähernd quadratisch mit einer Innenmulde **56** ausgebildet und mit zwei in versenkten Durchbrüchen **54a** und **54b** liegenden Schrauben **57a** und **57b** im Innern eines nicht dargestellten Kraftfahrzeugs auf dessen Armaturenbrettoberfläche **58** angeschraubt. Die Innenmulde **56** bildet das Gegenstück zu einem im oberen Teil der Handschale **53** angeformten Hörkapselteil **59**. Der Hörkapselteil **59** trägt eine Hörkapsel **61** (dynamisch, piezoelektrisch, ...). Die Innenmulde weist an zwei einander gegenüberliegenden Muldenwänden eine federnde Noppe **62** und eine feste Noppe **63** auf, welche in entsprechende Ausnehmungen **65a** und **65b** in den Seitenwänden des Hörkapselteils **59** greifen. Die federnde Noppe **62** ist als an der Seitenwand angeordnete federnde Lasche ausgebildet. Ferner weist die Konsole **55** einen für elektrische Umschaltfunktionen verwendeten, federnden Kontaktstift **65** auf.

Die Handschale **53** hat ausgehend vom Hörkapselteil **59** zwei gabelförmig ausgebildete, eine Ausnehmung **64** begrenzende Seitenleisten **66a** und **66b**, deren Endbereiche mit einer Achse **67** verbunden sind bzw. je ein Achsstück aufweisen. Der Hörkapselteil **59** ist mit einer Bodenplatte **88** verschlossen. Die Achse **67** dient als Schwenkachse für einen köcherartigen Einsteckteil **69**, in den das Handfunktelefon **51** mit seinem unteren Randbereich einsetzbar ist. Durch die Ausnehmung **64** hindurch können, sofern vorhanden, auf der Rückseite des Handfunktelefons **51** angeordnete, nicht dargestellte zusätzliche Anzeige- und Bedienelemente betrieben werden. Die Köchertiefe ist lediglich nur so groß gewählt, daß ein Halten möglich ist, jedoch die Tasten **70** des Handfunktelefons **51** einwandfrei bedienbar bleiben. Die Schwenkachse **67** ist im oberen Teil des Köcherhohlraums **71** angeordnet. Eine Führungsplatte **72** verlängert die Köcherrückwand **73** über den Köcherrand **75** hinaus. Hierdurch erhält der Einsteckteil **69** ein "pantoffelartiges" Aussehen. In der Köcherrückwand **73** ist ein Mikrofon **74** (dynamisches, elektrostatisches (Elektret) etc.) angeordnet. Hörkapsel **61** und Mikrofon **74** sind über den Kontaktstift **68** aktivierbar. Im den **Figuren 4a** bis **4d** ist die elektrische Verdrahtung nicht dargestellt.

Im Köcherboden **76** ist analog zu den obigen Ausführungen ein Interface **77** für die energetische und signalmäßige Ankopplung des Handfunktelefons **51** vorgesehen. Die Montage der Konsole **55** im Innenraum des Fahrzeugs erfolgt derart, daß das Handfunktelefon **51** von oben in das Einsteckteil **69** einsteckbar ist. Die Tasten **70** sind beim eingesteckten Handfunktelefon **51** außen, damit deren Bedienung auch im eingesteckten Zustand möglich ist.

Am zum Einsteckteil **69** anderen Ende der Handschale **53** ist ein Halteteil **79** mit einer Verriegelungseinrichtung für den oberen Teil des Handfunktelefons **51** angeordnet. Die Verriegelungseinrichtung weist einen an den Querschnitt der Antenne **81** des Handfunktelefons **51** angepaßten Längsschlitz **80** zur Antennenaufnahme auf. Dieser Längsschlitz **80** ist mit einem Schieber **83** derart überbrückbar (verschließbar), daß die Antenne **81** und damit das Handfunktelefon **51** in der Handschale **53** festgehalten ist. Der Schieber **83** ist mit einer Zugfeder **84** in der Verriegelungsstellung gehalten. Im oberen Teil des Halteteils **79** ist ein U-förmiges Verriegelungselement **85** mit ungleich langen Schenkeln **86a** und **86b** angeordnet. Der kurze Schenkel **86a** durchdringt die Bodenplatte **88** der Handschale **51** in einer Bohrung **90** und ist in **Figur 4a** durch die Rückseite **89** des Handfunktelefons **51** gegen die Kraft einer Feder **87** eingedrückt. Der lange Schenkel **86b** ist hierdurch aus einem Sackloch **91** ausgerückt. In diesem Zustand wird der Schieber **83** über den Längsschlitz **80** gezogen und fixiert das Handfunktelefon **51** über dessen Antenne **81**. **Figur 4c** zeigt die Konsole **55** mit eingelegter Handschale **53**, aber abgenommenem Handfunktelefon **51**. In diesem Fall ist der lange Schenkel **86b** in das Sackloch **91** eingerückt, wodurch der Schieber **83** entgegen der Zugkraft der Zugfeder **84** den Längsschlitz **80** offen hält.

Bei in die Handschale **53** eingelegtem Handfunktelefon **51** ist der Schenkel **86a** gegen die Kraft der Druckfeder **87** nach unten gedrückt und der Schieber **83** infolge der Kraft seiner Zugfeder **84** über die im Längsschlitz **80** liegende Antenne **81** gezogen. Zur Entnahme des Handfunktelefons **51** aus der Handschale **53** wird dieses an seinem oberen Teil gegriffen und mit dem Daumen der Schieber **83** nach links geschoben, bis die Antenne **81** frei ist. Das Handfunktelefon **51** wird nun entnommen, wodurch der Schenkel **86a** bereits beim Herausziehen um nur einige Grad bis zu seinem Anschlag des Bodenbügels **93** an die Bodenplatte **88** durch die Feder **87** herausgedrückt ist und damit gleichzeitig der lange Schenkel **86b** des Verriegelungshebels **85** in das Sackloch **91** eingedrungen ist, wodurch der Schieber **83** in seiner nach links ausgerückten Stellung gegen die Kraft seiner Zugfeder **84** gehalten ist. Hierdurch bleibt der Längsschlitz **80** offen. Das Handfunktelefon **51** kann jederzeit wieder zurückgelegt werden.

Wird nun das Handtelefon **51** wieder in die Handschale **53** eingelegt, so wird bei nahezu vollständigem Eindrücken des Handfunktelefons **51** der kurze Schenkel **86a** nach unten gedrückt und der Schieber **83** durch Herausziehen des langen Schenkels **86b** freigegeben, wodurch er durch die Feder **84** über die Antenne **81** geschoben wird. Das Handfunktelefon **51** ist wieder verriegelt gehalten.

Die seitliche Lagerung des Verriegelungselements **85** erfolgt einmal durch die Bohrung **90** in der Bodenplatte **88** und durch eine weitere Bohrung **95** unterhalb des Schiebers **83** in der Handschalenwand.

Das Handfunktelefon **51** wird in der Handschale **53** derart gehalten, daß die Tasten **70** frei zugänglich sind. Da nun die Handschale **53** an der "Rückseite" eine Hörkapsel als auch ein Mikrofon aufweist, kann ohne Verdrehen des Handfunktelefons in der Hand telefoniert werden.

Über eine an der "Kopfseite" der Handschale **53** angeordneten Taste **96** ist der Fernsprechbetrieb ein- und ausschaltbar.

Die **Figuren 5** bis **7** zeigen eine weitere Variante.

Die Halterung des als Handys **101** ausgebildeten Handfunktelefons in einem Basisteil **105** als Handschale erfolgt durch eine Haltesicherung **119**. Die Haltesicherung **119** übergreift beim Einlegen selbsttätig wenigstens einen Oberflächenbereich des Handys **101**, wodurch dieses dann gegen Herausfallen gesichert ist. Die Haltesicherung **119** ist als federbelasteter Schieber am oberen Ende des Basisteils **105** angeordnet und quer zu dessen Längsachse verschiebbar.

Der Basisteil **105** hat in seinem oberen Teil, im Bereich des federbelasteten Schiebers **119**, eine Mulde **120** als Aufnahmeeinheit für den Antennenfuß **121** der Antenne **122** des Handys **101**. In den **Figuren 5** bis **7** ist die Antenne **122** eingeschoben dargestellt. Der Schieber **119** und die Mulde **120** sind mit Blick auf den Querschnitt des Antennenfusses **121** derart ausgestaltet, daß der Antennenfuß **121** in die Mulde **120** einlegbar und mit dem Schieber **119** die Mulde derart verschließbar ist, daß das Handy **101** in seiner Lage fixiert ist.

Der Schieber **119** hat, wie insbesondere in **Figur 6** dargestellt ist, eine an den Querschnitt des Antennenfußes **121** angepaßte Randausnehmung **151** sowie einen Längsschlitz **153**, der in einer stufenartigen Schlitzvertiefung **154** endet. Unterhalb des Schiebers **119** innerhalb des oberen Bereichs des Basisteils **105** ist ein U-förmiger, mit einer Druckfeder **155** belasteter Stössel **156** angeordnet. Der Schieber **119** ist durch die Kraft einer Blattfeder **157** in seiner den eingelegten Antennenfuß **121** übergreifenden Lage gehalten. Der U-förmige Stössel **156** hat einen kurzen und einen langen Schenkel **159a** bzw. **159b**. An der Schenkelverbindung **161** greift die Druckfeder **155** an.

Wird der Schieber **119** senkrecht zur Achse des Antennenfußes **121** von diesem weggezogen, so rutscht das Ende des langen Schenkels **159b** in einer Nut **162** zum dem Antennenfuß benachbarten Schieberende **163** in die stufenartige Schlitzvertiefung **154** hinein. Der in der Mulde **120** liegende Antennenfuß **121** ist freigegeben und durch den kurzen Schenkel **159b**, der durch den Muldentiefpunkt greift, aus der Mulde **120** herausgeschoben. Durch das Einspringen des langen Schenkelendes in die Schlitzvertiefung **154** ist der Schieber **119** in seiner zurückgezogenen Lage fixiert. Wird nun der Antennenfuß **121** in die Mulde **120** eingedrückt, so wird der Stössel **156** gegen die Kraft der Druckfeder **155** eingeschoben, der lange Schenkel **159b** verläßt die Schlitzvertiefung **154** und die Blattfeder **157** schiebt den Schieber **119** über den Antennenfuß **121**; das Handy ist in seinem oberen Bereich gehalten.

Anstelle den kurzen Schenkel **159a** am Antennenfuß **121** angreifen zu lassen, kann er und seine Halterung derart ausgestaltet werden, daß er an jedem beliebigen Ort der Rückwand des Handys **101** in dessen oberen Teil angreift; der untere Handyteil wird ja durch den unten beschriebenen Einsteckteil **126** gehalten.

Im Einsteckteil **126** liegend, jedoch im Endbereich der Seitenleisten **123a** und **123b** sowie im Bereich der Achse **125**, ist je eine Krageinheit **129a** und **129b** angeordnet. Auch hier ist aufgrund der schematischen Darstellung in den **Figuren 5** und **7** nur die eine Krageinheit **123b** zu sehen. Die Höhe der Krageinheiten **129a** und **129b** ist so hoch, daß sie bis auf eine Toleranz der Breite des Einsteckteils **126** von dessen Rückwand **130a** zu dessen Vorderwand **130b** entspricht. Die Krageinheiten **129a** und **129b** weisen je eine zum Ausgang **131** des Einsteckteils **126** zeigende Auflagefläche **132a bzw. 132b** auf, auf der die Unterseite **133** des Handys **101** aufsteht. Die Auflageflächen **132a** und **132b** liegen senkrecht zur Basisrückwand und parallel zur Achse **125**.

Die Tiefe des Einsteckteils **126** ist gemäß untenstehenden Betrachtungen derart gewählt, daß der untere Teil des Handys **101** im eingeklappten Zustand des Einsteckteils **126** einwandfrei gehalten ist und im vorgeklappten Zustand das Handy **101** leicht herausnehmbar ist, ohne daß hierbei die Vorderseite **130b** beschädigt, insbesondere Teile hiervon abgebrochen oder eingerissen werden können.

Die Schwenkachse **125** ist im oberen Teil des köcherartigen Einsteckhohlraums **135** angeordnet. Eine Führungsplatte **136** verlängert die Rückwand **130a** über den Einsteckrand **137** hinaus. Hierdurch erhält der Einsteckteil **126** ein "pantoffelartiges" Aussehen. In der Einsteckteilrückwand (Köcherrückwand) **130a** ist ein (nicht dargestelltes) Mikrofon (dynamisches, elektrostatisches (Elektret), ...) angeordnet. Hörkapsel und Mikrofon sind über den Kontaktstift **117** aktivierbar. In den **Figuren 5** bis **7** ist die elektrische Verdrahtung nicht dargestellt.

Im Einsteckteil **126** ist ein Interface **139** für die energetische und signalmäßige Ankopplung des Handys **101** vorgesehen. Der Raum unterhalb der Krageinheiten **129a** und **129b** im Einsteckteil **126** dient insbesondere zur Aufnahme elektronischer Schaltungsanordnungen, beispielsweise für Ladezwecke, zur Signalverarbeitung bzw. deren Anpassung. Die Montage der Konsole **106** (beispielsweise im Innenraum eines Fahrzeugs) erfolgt derart, daß das Handy **101** von oben in das Einsteckteil **126** einsteckbar ist. Die Tasten **140** sind beim eingesteckten Handy **101** außen, damit deren Bedienung auch im eingesteckten Zustand möglich ist.

Die Vorderkante **141** an der Vorderseite **130b** des Einsteckrands **137** bewegt sich beim Aufklappen des Einsteckteils **126** auf einem Kreisbogen **136** um die Achse **125**. Die Auflageflächen **132a** und **132b** bleiben beim Aufklappen an Ort und Stelle; das Handy **101** wird jedoch nach vorne geklappt, d. h. die Unterseite **133** des Handys **101** wird auf den Auflageflächen **132a** und **132b** abgerollt, wodurch das Handy **101** im Einsteckteil **126** nach oben geschoben wird. Wie **Figur 5** zeigt, ist der untere Bereich des Handys **101** im eingeklappten Zustand u. a. durch die Vorderwandhöhe **a**_{**g**} der Vorderwand **130b** des Einsteckteils **126** sicher gehalten.

Im vorgeklappten Zustand des Einsteckteils **126** verringert sich die den unteren Bereich des Handys **101** noch haltende Vorderwandhöhe **a**_{**a**}, wie in **Figur 6** dargestellt ist. Das Handy kann problemlos entnommen werden. Eine Beschädigung der Vorderwand **130b** ist nicht mehr möglich.

Anstatt den Schieber **119** zum Übergreifen des eingelegten Antennenfußes **121** auszubilden, kann er auch einen Gehäuseteil umgreifen, der den Antennenfuß beinhaltet. Auch können beliebige Bereiche des Handy-Gehäuses von einem Schieber übergriffen werden. Bevorzugt wird man den Schieber jeweils im oberen Bereich des Handys und den Einsteckteil im unteren Bereich bei annähernd senkrechter Halterung verwenden. Es können jedoch die Orte des Schiebers und des Einsteckteils miteinander vertauscht werden.

Auch müssen die Auflageflächen **132a** und **132b** der Krageinheiten **129a** und **129b** nicht eben und auch nicht senkrecht zu den Seitenleisten **123a** und **123b** des Basisteils verlaufen. Da der untere Bereich des Handys **101** beim Aufklappen des Einsteckteils **126** an den Auflageflächen **132a** und **132b** nach oben geschoben wird, kann an deren oberem Rand eine (nicht dargestellte) Ausbuchtung nach oben angebracht werden. Hierdurch verringert sich beim Herausklappen des Einsteckteils die verbleibende Vorderwandhöhe **a**_{**a**} im Verhältnis zur "eingeklappten" Vorderwandhöhe **a**_{**g**}.

Anstatt den Einsteckteil **126** aufschwenkbar zu gestalten, können die Krageinheiten **129a** und **129b** federbelastet ausgebildet werden. Beim Herausnehmen des Handys **1** würde dann dessen unterer Bereich durch die Federkraft nach oben geschoben und dann erst auf der Oberfläche der Krageinheiten abrollen.

Anstelle der beiden seitlich angeordneten Krageinheiten **129a** und **129b** kann auch nur eine einzige etwa in der Mitte der Rückwand **130a** des Einsteckteils **126** auf dem Basisteil **105** angeordnet werden. Die Rückwand **130a** müßte in diesem Fall jedoch einen Durchbruch für diese einzige Krageinheit aufweisen. Die Lage dieser einzigen Krageinheit senkrecht zur Achse **125** müßte analog zu den beiden Krageinheiten gewählt werden. Gegenüber der oben ausgeführten Konstruktion ist diese aufwendiger und zudem mit einer geringeren mechanischen Stabilität verbunden.

Die oben beschriebenen Krageinheiten **129a** und **129b** sind in einer äußerst wirksamen und einfachen Konstruktion fest an den Seitenleisten **123a** und **123b** des Basisteils angeordnet. Zur Vergrößerung des Auswerfercharakters der Krageinheiten könnten diese auch mit einem an der Rückwand des Einsteckteils angeordneten Schieberelement, welches beim Vorklappen nach oben schiebbar ist, mitgeschoben werden.

Die in **Figur 5** dargestellte Telefongerätvariante hat ebenfalls eine Konsole **201** und ein in einer Handschale **203** herausnehmbar gehaltenes Handy **205**, dessen Bedienungstasten **206** nach oben zeigen. Die Handschale **203** ist mit einem signal- und energieversorgenden Kabel **204** verbunden. Die Konsole **201** ist, wie insbesondere in **Figur 10** ersichtlich, annähernd quadratisch mit einer Innenmulde **207** ausgebildet und mit zwei in versenkten Durchbrüchen **209a** und **209b** liegenden Schrauben **210a** und **210b** an einer Grundfläche **208** angeschraubt. Die Befestigung ist derart gewählt, daß Handschale **203** und Handy **205** annähernd vertikal in der Konsole **201** gehalten sind. Die Innenmulde **207** der Konsole **201** bildet das Gegenstück zu einem im oberen Teil **211** der Handschale **203** angeformten zusätzlichen Hörkapselteil **213**. Der Hörkapselteil **211** trägt eine Hörkapsel **214** (dynamisch, piezoelektrisch, ...). Die Innenmulde **207** weist an zwei einander gegenüberliegenden Muldenwänden eine federnde Noppe **215** und einen federnd gehaltenen Einraststift **217** auf. Noppe **215** und Einraststift **217** greifen in entsprechende Ausnehmungen **219a** und **219b** in den Seitenwänden des Hörkapselteils **213**. Die federnde Noppe **215** ist mit einem Seitenwandteil des Hörkapselteils **213** als federnde Lasche ausgebildet.

Die Handschale **203** hat in ihrem unteren Bereich eine starre Einsteckmulde **220** für die seitliche, formschlüssige Halterung des unteren Handyrands **221**. Der Muldenrand **222** umschließt den vorderen und seitlichen Handyrand **221**. Der die Rückseite der Handschale **203** bildende Schalenboden **223** ist kompakt ausgebildet. Er gibt der Handschale **203** Stabilität und dient gleichzeitig als Einführungshilfe für dem unteren Handyrand **221** in die Mulde **220**. In der Einsteckmulde **220** ist ein mit einer Feder **225** schwimmend gehaltener Stecker **226** für die Energie- und Signalübertragung zum Handy **205** als Interface angeordnet. Der Stecker **226** ist an seinem dem Handy **205** abgewandten Ende um eine zur Handyoberfläche parallel verlaufende Schwenkachse **227** schwenkbar gelagert. Die Einsteckmulde **220** weist ein akustisch zur Rückseite **221** offenes Mikrofon **229** auf.

Die Handschale **203** hat in ihrem oberen Bereich **211** eine Halteeinheit **230** für den rückseitigen Handyoberteil. In die Halteeinheit **230** ist das Handy **205** selbsttätig verriegelnd eindrückbar und nur über eine in der Handschale **203** angeordnete Entriegelungstaste **231** einer Entriegelungsvorrichtung, welche in **Figur 10** sichtbar ist, zur Entnahme entriegelbar. Die Entriegelungstaste **231** ist Teil einer gegen eine Druckfeder **233** verschiebbaren, im Schalenboden **223** angeordneten Platte **235**. Die Platte **235** hat einen Durchbruch **237**, durch den eine unten beschriebene Ausstelleinheit **239** greift, und ist an den seitlichen Kanten **236a** und **236b** einer Vertiefung **238** in Schalenboden **223** geführt. Die seitliche Breite **s** des Durchbruchs **237** ist um eine Spieltoleranz größer als die Außenbreite der Ausstelleinheit **239**. Die Längsbreite **1** des Durchbruchs ist um eine Toleranz größer als die Längsbreite der Ausstelleinheit **239** plus Entriegelungsweg der Entriegelungstaste **231**. In dem in **Figur 12** gezeigten Ausführungsbeispiel hat die Ausstelleinheit **239** einen kreiszylindrischen Stössel **240**.

Ferner hat die Platte **235** zwei zu ihrer Längsmittellinie **241** spiegelsymmetrisch ausgebildete, hierzu schräg verlaufende Führungsschlitze **243a** und **243b**. In den Führungsschlitz **243a** greift ein Stift **244a**, der an der Unterseite eines ebenfalls zur Halteeinheit **230** gehörenden Winkelschiebers **245a** angeordnet ist. Der Winkelschieber **245a** ist in einer Nut **247a** im Schalenboden **223** verschiebbar. An seinem äußeren Ende hat der Winkelschieber **245a** einen hochstehenden Winkelschenkel **251a** mit einer nasenförmigen Noppe **253a** als Rastelementteil. Diese Noppe **253a** greift in eine entsprechende Vertiefung **254a** als anderes Rastelementteil in der Schmalseite des oberen Bereichs **256** Handys **205**. Die Nasenschräge der Noppe **253a** ist derart ausgebildet, daß sich die Noppe **253a** nach oben verjüngt. Spiegelbildlich zum Winkelschieber **245a** ist ein Winkelschieber **245b** mit einem entsprechenden Winkelschenkel **251b** und einer entsprechenden Noppe **253b** vorhanden, der in der Nut **243b** synchron verschiebbar ist und dessen Noppe **253b** in eine zur Vertiefung **254a** ausgebildete Vertiefung **254b** in der gegenüberliegenden Handyschmalseite zum Eingriff bringbar ist. Der Winkelschenkel **251b** mit seiner Noppe **253b** ist in **Figur 9** erkennbar. Wie ebenfalls in **Figur 9** sowie in **Figur 12** und **13** erkennbar ist, sind die Platte **235**, die in den Nuten **247a** und **247b** liegenden anderen Schenkel **255a** und **255b** sowie die Druckfeder **33** mit einer Abdeckung **57** abgedeckt. Die Abdeckung **257** weist für den Stössel **240** der Ausstelleinheit **239** einen seinem Querschnitt entsprechenden, lediglich um eine Spielpassung vergrößerten Durchbruch **259** auf. Dieser Durchbruch **259** dient als Führung für den Stössel **240**.

Der in **Figur 13** in einem Längsschnitt dargestellte Stössel **240** sitzt in einer kreiszylindrischen Vertiefung **260** im Schalenboden **223**. Die Vertiefung **260** hat eine zentrisch angeordnete, kreiszylindrische Erhebung **261**, welche durch einen Ringraum **263** von der Innenwand der Vertiefung **260** distanziert ist. Die Erhebung **261** dient als seitliche Stütze für eine um die Erhebung herum liegende Druckfeder **262**. Der Stössel **240** ist als kreiszylindrische Kappe ausgebildet, deren Außendurchmesser um eine Spieltoleranz kleiner ist als der Durchmesser des Durchbruchs **259**. Der Innendurchmesser des Stössels **240** ist um eine Toleranz größer als der Außendurchmesser der im Ringraum **263** liegenden Druckfeder **262**. Die Tiefe des Ringraums **263** sowie die Kappentiefe sind derart bemessen, daß ausreichend Raum für die zusammengedrückte Druckfeder **262** vorhanden ist und im eingedrückten Zustand die Kappenoberfläche **265** des Stössels **240** annähernd mit der freien Oberfläche der Abdeckung **257** fluchtet.

Im Außenmantel des Stössels **240** verläuft eine Längsnut **267**, welche unterhalb der Kappenoberfläche stufenartig in einen Einstich **269** übergeht. Passend für einen Eingriff in diesem Einstich **269** hat die mit der Eintriegelungstaste **231** gegen die Kraft der Feder **233** verschiebbare Platte **235** einen Vorsprung **270**. Beim Eingriff des Vorsprungs **270** in den Einstich **260** infolge der Kraft der Feder **233** ist der Stössel **240** in seiner eingezogenen Lage gehalten. Gleichzeitig sind auch die Winkelschieber **245a** und **245b** nach innen gezogen. In diesem Zustand ist ein in die Handschale **203** eingelegtes Handy **205** unverlierbar in dieser gehalten, wobei dann die Noppen **253a** und **253b** in die entsprechenden Vertiefungen **254a** und **254b** in der Längsseite des Handys **205** formschlüssig greifen. Im durch die Druckfeder **262** herausgeschobenen Zustand wird der Stössel **240** gegen ein vollständiges Herausdrücken durch den Eingriff des Vorsprungs **270** am zum Zylindermantel gehenden stufenförmigen unteren Ende **271** der Längsnut **267** gehalten.

Der Stössel **240** wirkt mit einem nicht dargestellten elektrischen Schalter zusammen. Nur bei eingedrücktem Stössel **240** ist das Mikrofon **229** und die Hörkapsel **14** in der Handschale aktiviert.

Wird nun bei in die Handschale **203** eingelegtem Handy **205** die Entriegelungstaste **231** eingedrückt, so werden über die Führungsschlitze **243a** und **243b** sowie die Stifte **244a** und **244b** die Winkelschieber **245a** und **245b** nach außen in der Nut **247a** bzw. **247b** verschoben. Hierdurch werden die Noppen **253a** und **253b** aus den entsprechenden Vertiefungen **254a** und **254b** in den Längsseiten des Handys **205** bewegt. Der Oberteil **256** des Handys **205** ist nun frei, der untere Handyrand **221** steckt noch in der Einsteckmulde **220**, gehalten durch den Muldenrand **222**. Gleichzeitig wird der Vorsprung **270** aus dem Einstich **269** gezogen, wodurch der Stössel **240** freigegeben wird und durch die Druckfeder **262** aus dem Schalenboden **223** hervorgedrückt wird, bis der Vorsprung **270** am unteren Ende **271** der Längsnut **267** ansteht. Hierdurch wird der Oberteil **211** des Handys **205** aus der Handschale **203** herausgeschoben und kann nun gut mit der Hand gegriffen werden. Der Oberteil **211** wird bevorzugt um 5° bis 20° zur guten Entnahme herausgedrückt.

Beim Einlegen des Handys **205** drücken dessen Längsseiten infolge der Nasenschräge der Noppen **253a** und **253b** die Winkelschenkel **251a** und **251b**, d. h. die Winkelschieber **245a** und **245b** nach außen. Über deren Stifte **244a** und **244b** und die Führungsschlitze **243a** und **243b** wird die Platte **235** in Richtung **A** gezogen. Ist das Handy **205** nahezu vollständig eingedrückt, rasten die Noppen **253a** und **253b** in den Vertiefungen **254a** und **254b** in der Schmalseite des Handys **205** und auch der Vorsprung **270** im Einstich **269** ein. Das Handy **205** ist verriegelt und der Stössel **240** bei gespannter Druckfeder **262** in seiner eingedrückten Position gehalten.

Wie bereits oben erwähnt, wird beim Eindrücken des Stössels **240** ein (nicht dargestellter) elektrischer Kontakt geschlossen, der die Hörkapsel **214** und das Mikrofon **229** in der Handschale **203** aktiviert. Wird nun der Stössel **240** manuell ohne Einlegen des Handys **205** eingedrückt, kann ein zweiter Gesprächsteilnehmer mitsprechen und -hören.

Anstatt die Winkelschieber **245a** und **245b** mittels jeweils einem Führungsschlitz **243a** bzw. **243b** und einem eingreifenden Stift **244a** bzw. **244b** zu verschieben, können auch Platte und Winkelschieber ineinander greifende Schrägen aufweisen. In diesem Fall sind dann die Winkelschieber mit einer Feder gegeneinander bzw. gegen die Platte zu drücken. Diese drückende Kraft kann auch durch jeweils eine Feder gegen den nach oben stehenden Winkelschenkel im Rand der Handschale erzeugt werden.

Bei den bevorzugt in Kraftfahrzeugen eingesetzten Handys (Handfunktelefonen) kann bei der Konstruktion der Halterung nicht immer von genau vorgegebenen Dimensionen des einzusetzenden Handys ausgegangen werden. Je nach Handytyp ergeben sich Abweichungen, zum Teil sogar beim gleichen Modell, wenn unterschiedliche "Batterie-Packs" (Akkumulatoren) eingesetzt werden.

Es wird nun vorgeschlagen, das Handy in der Aufnahmestellung des Einsteckteils mit Spiel einzusetzen. Die Fassung wird also so weit bemessen, daß die aufzunehmenden Handys (es werden hierunter selbstverständlich auch Handapparate verstanden) ungeachtet ihrer Dickentoleranzen ohne Druck und mithin ohne Beschädigungsgefahr eingesetzt bzw. eingeschoben werden können. Trotz der weiten Fassung, in welcher das Handy mit Spiel gehalten ist, wirken federnde Andruckmittel in der Aufnahmelage noch nicht oder höchstens mit geringfügigem Druck. Es entfällt deshalb nicht nur die bisher bei einigen Fassungen bestehende Beschädigungsgefahr, sondern auch die Beschädigungsgefahr, die bei einem mit der Fassung mitbewegten Federmittel auftreten würde, weil auch im letzteren Fall das Handy an einer Fassungswand reibt, wodurch Scheifspuren und Kratzer entstehen können.

Die hier verwendeten Andruckmittel entfalten ihre Wirkung erst, wenn der Einsteckteil in die Ruhelage schwenkt, wobei sie das Handy in der Ruhelage mit maximaler Druckkraft gegen den oberen Fassungsteil und ggf. gegen die Haltesicherung drücken, so daß das Handy sicher gehalten ist und während der Fahrt nicht klappern kann.

Eine in **Figur 14** dargestellte Schwenkachse **315**, um die der Einsteckteil **304** schwenkbar gelagert ist, befindet sich am Fuß **316** der Handschale **303**. Aus der Ruhelage wird der Einsteckteil **304** durch federnde Schwenkmittel, nämlich ein Paar an der Handschale **303** abgestützte, klammerartige Druckfedern **319** in die Aufnahmelage geschwenkt. Durch Druck auf das vom Einsteckteil **304** aufgenommene Handy **302** gegen die Kraft des Druckfederpaares **319** wird der Einsteckteil **304** in die eingeschwenkte Ruhelage zurückgeführt. In dieser liegt die Antenne des Handy in einem Längsschlitz der Stirnwand der Handschale.

Der Einsteckteil **304** ist köcherartig ausgebildet. Es hat eine Trennwand **324**, welche ein kappenartiges Ende **325** abtrennt. Der Mund des Einsteckteils **304** ist dem unteren Endteil **13** des Handys **302** mit so großem Spiel angepaßt, daß unterschiedlich dicke Handys, namentlich Handys **302** mit um größere Dickentoleranzen abweichende Batteriepacks (Akkus unterschiedlicher Leistung) eingesetzt werden können.

Eine Auflageplatte **325** als Verlängerung des rückwärtigen Bereichs des Einsteckteils **304** hat eine (nicht dargestellte) Ausnehmung, in welcher eine sehr dünne an die Trennwand **324** angespritze Andruckzunge (Andrucklasche) **336** angeordnet ist, die als Druckübertragungsorgan wirkt. Auf die Andruckzunge **336** drückt ein federndes Andruckmittel, nämlich eine an der Handschale **303** abgestützte Biegefeder (Druckfeder) **337**. Über die dazwischenliegende Andruckzunge **336** drückt die Biegefeder **337** das Handy **302** an die obere Seite (Köcherschale) **338** des Munds des Einsteckteils, sobald dieser in die eingeschwenkte Ruhelage geführt wird.

In der ausgeschwenkten Aufnahmelage ist die Biegefeder **337** völlig entspannt und ihr Andruckende von der Andruckzunge **336** distanziert, so daß keinerlei Druck ausgeübt wird. Beim schwenken in die Ruhelage drückt die Biegefeder **337** allmählich immer stärker über die Andruckzunge **336** auf das Handy **302**, bis sie in der Ruhestellung das Handy mit maximaler Federkraft gegen den oberen Teil des Munds des Einsteckteils preßt. Der auf das Handy **302** nach oben wirkende Federdruck bewirkt dabei auch eine (wenn auch geringe) Anpressung der Antenne in deren Haltesicherung.

Durch den Druck der Biegefeder **337** werden sowohl dünne als auch dicke Handys **302** zuverlässig und fest gehalten, so daß namentlich bei Erschütterungen keine klappernden Geräusche auftreten, die sonst etwa bei Fahrten über holprige Straßen unausweichlich sind.

Die Halterung kann statt für ein Handy auch für einen Handapparat verwendet werden, beispielsweise für den Handapparat eines üblichen Autotelefons ausgestattet werden. Dabei stellt sich zwar das Problem der unterschiedlichen Handydicke nicht. Dennoch bietet die Nutzung der oben ausgeführten Konstruktion auch für ein fest installiertes, komplettes Autotelefon Vorteile: Der Handapparat läßt sich nämlich auch hier leicht und mühelos in den Einsteckteil einführen, wodurch nicht nur die Handhabung erleichtert, sondern auch mechanische Abnutzungensspuren an der Außenfläche des Handapparatfusses und Beschädigungsgefahren verringert werden. Die Handschale ist in diesem Fall zweckmäßig ein fest im Fahrzeug zu verankernder Montagesockel. Bei der Ausbildung der Telefonhalterung für den Handapparat ist selbstverständlich der Durchführung des an den Handapparat angeschlossenen Kabels Rechnung zu tragen. Beispielsweise kann der über den Handappart greifende Teil **338** der Hundes des Einsteckteils und das kappenartige Ende **325** einen durchgehenden breiten Schlitz für den Durchgang des Handapparatanschlußkabels aufweisen. Zweckmäßig greift in diesem Fall die Halterung (bzw. der Einsteckteil und dessen Mund) jedoch gabelartig nur gerade über die Randbreite der Oberseite des Handapparats, so daß die Halterung für das Kabel von oben frei zugänglich ist.

Die Biegefeder **337** kann auch so bemessen sein, daß sie in der ausgeschwenkten Aufnahmelage des Einsteckteils **304** mit geringem Druck auf die Andruckzunge **336** bzw. das Handy wirkt. Sie ist jedoch so auszuführen, daß in der Aufnahmelage höchstens mit geringem Druck auf das Handy **302** gedrückt wird, damit dieses nahezu drucklos in den Einsteckteil **304** eingesetzt und herausgenommen werden kann.

Anstelle der an den Einsteckteil **304** angespritzten dünnen Andruckzunge oder -lasche **336** kann auch ein dickeres Andruckorgan vorgesehen werden, das gelenkig am Einsteckteil gelagert ist. Wesentlich ist, daß es sich lediglich um ein Druckübertragungsorgan handelt, daß also eine allfällige eigene elastische Wirkung (Federwirkung) des Organs kleiner als die Federkraft bzw. Elastizität der Biegefeder ist.

Es geht letztendlich darum, daß der Druck in Abhängigkeit von der Schwenklage ausgeübt wird, nämlich minimal in der Aufnahmelage und maximal in der Ruhelage. Das ist jedenfalls mit einer am Basisteil gelagerten Andruckfeder möglich. Bei einer mit dem Einsteckteil mitbewegten Andruckfeder oder einem mitbewegten, die Andruckfeder elastisch unterstützenden Druckübertragungsorgan ist das nur möglich, wenn die Andruckfeder bzw. das Übertragungsargan so ausgestaltet und angeordnet sind, daß sie bzw. es beim Schwenken in die Ruhelage an der Handschale anstößt und durch die dann gegebene Abstützung an der Handschale zunehmend stärker auf das Handy drückt.

Grundsätzlich könnte das Druckausübungsorgan **336** statt am Einsteckteil **304** angespritzt auch an der Handschale **303** bzw. auf der Biegefeder **337** gelagert sein, wobei eine eigene Federwirkung die Wirkung der Biegefeder **337** in erwünschter Weise unterstützt. Die Lagerung des Druckausübungsorgans am Einsteckteil ist in dessen bevorzugt, weil dadurch gewährleistet ist, daß das Organ nicht am Handyboden hin- und herrutscht und diesen beschädigt.

Die Handschale kann auf ihrer Rückseite auch als Montagesockel ausgebildet sein zwecks Verankerung auf einer Unterlage oder an einer Wand. Das ist namentlich für fest installierte, komplette Autotelefonanlagen vorteilhaft, bei denen die Halterung einen üblichen Handapparat aufnimmt.

Die Erfindung beschränkt sich natürlich nicht auf die beschriebenen Ausführungsbeispiele. Es ist erkennbar, daß die Merkmale der Beispiele untereinander kombinierbar sind. So kann z. B. die Handschale in unterschiedlicher Weise auf der Konsole befestigbar sein (Magnethalterung, Clipphalterung, Klemmbefestigung, Schnappriegelarretierung, ...). Wichtig für die Anwendung in Kraftfahrzeugen ist eine Befestigungsart, die sich auch bei Erschütterungen und plötzlichen Stößen bewährt.

Das Handfunktelefon kann statt von vorne (**Figuren 1a** bis **1c**) oder von hinten (**Figuren** 2a und **2b**) auch von der Seite in die Handschale eingeführt bzw. eingeschoben werden. Vorzugsweise, aber nicht zwingend, bilden Handfunktelefon, Handschale und Konsole eine optische bzw. formäßige, abgerundete Einheit.

Grundsätzlich kann die Konsole in irgendeiner Weise (also auch in an sich bekannter Weise) ausführt sein. Das Handfunktelefon kann speziell für die erfindungsgemäße Einrichtung konstruiert sein. Die Handschale kann jedoch auch auf ein Handfunktelefon bekannter Bauart angepaßt werden. Die Freisprechmöglichkeiten an der Handschale bzw. an der Konsole sind optional, d. h. die Handschale kann als mechanische Halterung mit Antennenanschluß ausgebildet sein. Es ist offensichtlich, daß Freisprechmikrofon bzw. Lautsprecher wahlweise an der Konsole oder an der Handschale vorgesehen sein können.

Wenn die Handschale über Hör- und Sprechmuschel verfügt, dann ist ein Telefonieren mit diesem bequemer, weil der Abstand der Muscheln größer als beim Handfunktelefon sind. Letzteres soll aus Gewichts- und Platzgründen bekanntlich so klein wie möglich sein.

Ein allenfalls erwünschter Kartenleser für eine Chip- oder Telefonkarte ist vorzugsweise im Handfunktelefon integriert.

Selbstverständlich kann aber auch die Handschale oder Konsole über entsprechende Möglichkeiten verfügen.

Wo der Stecker zum elektrischen Ankoppeln des Handfunktelefons zu plazieren ist, hängt nicht zuletzt davon ab, wie das Handfunktelefon konstruiert ist. Je nach Ausführung des Handfunktelefons kann der Stecker statt unten auch oben, an der Seite oder an anderer Stelle vorgesehen sein.

Die Konsole ist natürlich nicht zwingend. Im Prinzip genügt eine kleine Einsteckhalterung für die Handschale.

Der Abstand zwischen der Sprechmuschel und der Hörmuschel des Handapparats (bzw. der Handschale) wird vorzugsweise möglichst groß gewählt, wobei die Bemessung zweckmäßig unter Berücksichtigung des Übersprechens bzw. des sog. "echo return loss" und "stability loss" vorgenommen wird und beispielsweise nach der DIN-Norm bzw. entsprechenden internationalen Empfehlungen (Recommendation P.76) erfolgen kann. Weil das Handfunktelefon (vorzugsweise ein sog. Handy) als kleines und leichtes Gerät vorhanden ist, kann beim dieses aufnehmenden Handapparat (bzw. Handschale) der Aspekt der Leichtigkeit und Kleinheit zugunsten des akustischen Aspekts zurücktreten, die Anordnung also so getroffen werden, daß der Abstand der Muscheln dem Abstand von Mund und Ohr entspricht oder zumindest nahezu entspricht und akustische Rückkopplung auch bei hoher Hörmuschel-Lautstärke vermieden wird. Dabei kann der Handapparat Einstellmittel (Druck- oder Drehknöpfe) zur Einstellung der Lautstärke aufweisen.

Wie erwähnt sind die Hör- und Sprechmuschel an der Innenseite des Handapparats angeordnet und die Tasten sowie die Anzeige (LCD) des eingesetzten Handfunktelefons (bzw. Handys) an der Außenseite. Dabei ist die Anordnung zweckmäßig so getroffen, daß alle Tasten des eingesetzten Handfunktelefons (Handys) betätigbar, dessen Anzeige(n) vollständig sichtbar sind und dessen Signaltongeber einen freien Ausgang hat. Wenn das Handapparat-Gehäuse wichtige Tasten, Anzeigen oder den Signaltongeber abdeckt, können an den betreffenden Stellen Aussparungen im Gehuse vorgesehen werden. Beispielsweise kann im köcherartigen Einsteckteil **69** eine nach Art eines Schalltrichters ausgebildete Öffnung für einen am unteren Handyende angeordneten Signaltongeber vorgesehen sein.

Das Mikrofon des Handfunktelefons (Handys) kann im in den Handapparat eingesetzten Zustand als Freisprechmikrofon des Handapparats geschaltet sein.

Das Handfunktelefon (Handy) wird zwar vorzugsweise vollständig vom Handapparat (von der Handschale) umgeben. Das Handfunktelefon (Handy) kann aber auch geringfügig über die Schale vorstehen, beispielsweise kann die Handy-Antenne oder der die Antenne tragende Handyteil aus der Handschale vorstehen, diese also überragen.

Das erfindungsgemäße Telefongerät ist besonders für ein Autotelefon geeignet, bei dem der Handapparat (Handschale) mit der (fest installierten) Autoantenne verbunden ist, wobei der Sende- und Empfangsteil (bzw. Funkteil) durch den im Handy vorhandenen Funkteil oder einen speziellen (leistungsfähigeren) Funkteil gebildet ist, der im Handapparat, in der Konsole bzw. Handapparat-Halterung oder im Fahrzeug, zum Beispiel dessen Kofferraum angeordnet sein kann. Das erfindungsgemäße Telefongerät kann aber auch anders eingesetzt werden, beispielsweise in Schiffen, Flugzeugen und Eisenbahnzügen. Die Anwendung beschränkt sich dabei nicht auf das Funknetz (C-Netz, D-Netz, E-Netz). Der Handapparat bzw. die Handschale kann auch mit einem Anschlusskabel entweder indirekt über eine Tischstation, Halterung, Konsole o. dgl. oder direkt an das normale Telefonkabelnetz angeschlossen sein.

Das Telefongerät kann im übrigen eine Einrichtung zur Aufnahme lediglich eines Handfunktelefons sowie auch eine vollständige Telefoniereinrichtung sein, wobei das Handfunktelefon vorzugsweise ein sog. Handy (mit Funkkontakt zu terrestrischen Stationen oder Satelliten) ist, aber auch ein sog. schnurloses Telefon sein kann.

## Patentansprüche

1. Telefongerät mit einer Haltetung **(19; 26; 41; 55)** und einem ein Mikrofon **(13;35; 44; 74; 229)** und eine Hörkapsel aufweisenden Handfunktelefon **(1; 24; 39; 101; 205; 302)**, **gekennzeichnet durch** einen manuell frei beweglichen, in der Halterung entnehmbar halterbaren, ebenfalls ein Mikrofon und eine Hörkapsel aufweisenden Handapparat, der einen Platz zur Aufnahme und elektrischen Ankopplung des von ihm entfernbaren Handfunktelefons **(1; 24; 39; 101; 205; 302)** hat.

2. Telefongerät nach Anspruch 1, dadurch gekennzeichnet, daß der Handapparat einen als Handschale (8; 25; 40; 53; 105; 205) ausgebildeten Adapter für das Handfunktelefon (1; 24; 39; 51; 101; 205; 302) hat, der bevorzugt signalmäßig mit einem im Handfunktelefon (1) integrierten Telefonieschaltkreis verbunden ist, um die akustischen Funktionen des Handfunktelefons (1) übernehmen zu können, wobei insbesondere das Mikrofon der Sprechmuschel als Freisprechmikrofon (16) ausgebildet und schaltbar ist.

3. Telefongerät nach Anspruch 2, dadurch gekennzeichnet, daß die Halterung als Konsole (19; 26; 41; 55) ausgebildet ist, welche eine manuell entriegelbare Verriegelungseinheit (83) aufweist, damit der Handapparat (8; 25; 40; 53) auch bei einer in einem Fahrzeug montierten Konsole (19; 26; 41; 55) sich nicht durch dessen Erschütterungen lösen kann.

4. Telefongerät nach Anspruch 2 oder 3, dadurch gekennzeichnet, daß der Handapparat (53) einen bevorzugt um 10° bis 20° aufschwenkbaren, insbesondere köcherartigen Einsteckteil (69) hat, in den das Handfunktelefon (51) derart teilweise einsteckbar ist, daß die Bedienelemente (70) des Handfunktelefons (51) bedienbar bleiben.

5. Telefongerät nach Anspruch 4, dadurch gekennzeichnet, daß der Einsteckteil (69) sowohl in der aufgeschwenkten als auch in der zugeschwenkten Lage lagestabil gehalten ist, um insbesondere beim Einbau in Fahrzeugen Schwenkvibrationen zu vermeiden.

6. Telefongerät nach Anspruch 4 oder 5, dadurch gekennzeichnet, daß die Schwenkachse (67) des köcherartigen Einsteckteils (69) an der Aussenseite des Köcherhohlraums (71), insbesondere in dessen oberer Hälfte angeordnet ist und die Köcherrückwand (73) über den Köcherrand (75) nach oben verlängert ist, um als Führungsplatte (72) für das einzuschiebende Handfunktelefon (51) zu dienen.

7. Telefongerät nach einem der Ansprüche 4 bis 6, dadurch gekennzeichnet, daß der Einsteckteil (304) durch an der Basis (303) der Handschale abgestützte federnde Schwenkmittel (319) aus einer zugeschwenkten Ruhelage in eine aufgeschwenkte Aufnahmelage schwenkbar und durch Druck auf das von ihm aufgenommene Handfunktelefon (302) gegen die Federkraft der Schwenkmittel (319) in die zugeschwenkte Ruhelage rückbar und in dieser durch eine entweder an ihm oder am Handfunktelefon (302) angreifende Haltesicherung (322) sicherbar ist, wobei am Einsteckteil (304) oder an der Handschale (303) eine Fassung (323) gebildet ist, welche mit Spiel unter und über das Handfunktelefon (302) greift, federnde Andruckmittel (337) unmittelbar durch eine Ausnehmung (332) des Einsteckteils (304) oder mittelbar über ein Druckübertragungsorgan (336) an der Unterseite des Handfunktelefons (302) angreifen und dieses an den übergreifenden Teil (338) der Fassung (323) andrücken, wenn der Einsteckteil (304) in die zugeschwenkte Ruhelage zurückgeführt wird, wobei die federnden Andruckmittel (337) in der aufgeschwenkten Aufnahmelage des Einsteckteils (304) nicht oder höchstens mit geringem Druck auf das Handfunktelefon (302) drücken, damit dieses (302) drucklos in die Fassung (323) eingesetzt und herausgenommen werden kann, bevorzugt die federnden Andruckmittel durch mindestens eine Druckfeder (337) gebildet sind, die vorzugsweise am der Haltesicherung (322) abgewandten Endteil des Handfunktelefons (302) unmittelbar oder mittelbar angreift und insbesondere die federnden Andruckmittel (337) auf ein bewegliches, am Einsteckteil (304) gebildetes oder angelenktes Druckübertragungsorgan wirken, das vorzugsweise durch eine am Einsteckteil (304) angespritzte dünne Andruckzunge oder -lasche (336) gebildet ist.

8. Telefongerät nach einem der Ansprüche 4 bis 7, dadurch gekennzeichnet, daß der Einsteckteil (126) wenigstens eine in diesem angeordnete Krageinheit (129a, 129b) für die Auflage des unteren Bereichs des Handfunktelefons (101) und eine Aufnahme der Krageinheit aufweist, wobei sich beim Schwenken des Einsteckteils (126) eine Relativbewegung zwischen der Handfunktelefonauflagefläche (132b) der Krageinheit (129b) und dem oberen Rand (137) des Einsteckteils (126), insbesondere dessen vorderem Randbereichs (141) ergibt, wodurch das Handfunktelefon (101) im aufgeschwenkten Zustand leicht entnehmbar sowie im zugeschwenkten Zustand sicher gehalten ist.

9. Telefongerät nach Anspruch 8, dadurch gekennzeichnet, daß die Aufnahme fest in bezug auf die Lage der Schwenkachse (125) des Einsteckteils (126) angeordnet ist, die Handfunktelefonauflagefläche (132b) der Krageinheit (129b) insbesondere parallel zur Schwenkachse (125) und senkrecht zur Einlageebene des Handfunktelefons (101) im eingelegten Zustand verläuft und insbesondere annähernd den gesamten Querschnitt des Einsteckteils (126) bis auf die für das Aufschwenken notwendigen Abstandstoleranzen ausfüllt sowie bevorzugt die Schwenkachse (125) des Einsteckteils (126) im Fußbereich der Krageinheit (129b) gegenüber deren Auflagefläche (132b) für den Unterteil des Handfunktelefons (101) rückwärts versetzt angeordnet ist.

10. Telefongerät nach einem der Ansprüche 2 bis 9, dadurch gekennzeichnet, daß die Handschale (105) bevorzugt eine Aufnahmeeinheit für den Antennenfuß oder den den Antennenfuß tragenden Gehäuseteil hat, das Handfunktelefon (101) in der Handschale (105) mit einer wenigstens seinen Oberflächenbereich beim Einlegen selbsttätig übergreifenden Haltesicherung (119) gegen Herausfallen gesichert gehalten ist und die Haltesicherung (119) als federbelastete Schiebesicherung ausgebildet ist, welche bevorzugt den Antennenfuß oder den den Antennenfuß tragenden Gehäuseteil des Handfunktelefons (101) sichernd überdeckt, wobei bevorzugt die Haltesicherung (119) in die Offenstellung manuell verschiebbar und in dieser Stellung durch einen federbelasteten, in die Haltesicherung (119) einrastenden Stössel (156) gehalten ist, sowie vorzugsweise für einen Oberflächenbereich (121) des Handfunktelefons (101) ein Angriffsort (120, 121) für den Stösse (156) vorhanden ist, durch den dieser (156) beim Einlegen des Handfunktelefons (101) aus der Raststellung unter Freigabe der Haltesicherung (119) bewegbar ist.

11. Telefongerät nach einem der Ansprüche 2 bis 10, dadurch gekennzeichnet, daß die Handschale (203) eine starre Einsteckmulde (220) für die seitliche formschlüssige Halterung des unteren Handfunktelefonrands (221) und im oberen Bereich (211) für den rückseitigen Handfunktelefonoberteil eine Halteeinheit (230) hat, in die das Handfunktelefon (205) selbsttätig verriegelnd eindrückbar und nur über eine Entriegelungsvorrichtung (231) zur Entnahme entriegelbar ist, und bevorzugt eine mit der Halteeinheit (230) zusammenwirkende Ausstelleinheit (239) vorhanden ist, welche bei Entriegelung den Handfunktelefonoberteil (211) bei einem Verbleib des unteren Handfunktelefonrands (21) in der Einsteckmulde (220) bevorzugt unter einem Winkel zwischen 5° und 20° zur guten manuellen Entnahme hervorschiebt.

12. Telefongerät nach einem der Ansprüche 1 bis 11, gekennzeichnet durch ein Interface (226) zur insbesondere signal- und energiemäßigen Übertragung von der Handschale (203) in das Handfunktelefon (205), wobei eine Interfacehälfte (226) bevorzugt in der Einsteckmulde (220) um eine parallel zum Schalenboden (223) und senkrecht zu dessen Längsausdehnung verlaufende Schwenkachse (227) schwimmend federnd gehalten angeordnet ist.

13. Telefongerät nach einem der Ansprüche 2 bis 12, dadurch gekennzeichnet, daß die Handschale (8; 25; 53), insbesondere zusammen mit dem eingelegten Handfunktelefon (39; 51) im Sinn eines konventionellen Telefonhörers ausgebildet bzw. bogenförmig gekrümmt ist, wobei die Hör- und Sprechmuschel (8.2 resp 8.1; 35) der Handschale an der Seite angeordnet sind, welche derjenigen Seite gegenüberliegt, die den Platz zur Aufnahme des Handfunktelefons aufweist, und die Ausnehmung (9; 29) für das Handfunktelefon (1; 8) so gestaltet ist, daß die Tastatur (3; 70) des Handfunktelefons nach dessen Einlegen zugänglich bleibt.

## Claims

1. A telephone set comprising a holder (19; 26; 41; 55) and a mobile telephone handset (1; 24; 39; 101; 205; 302) having a microphone (13; 35; 44; 74; 229) and an earpiece, characterized by a base unit which can be stored in the holder and removed for manual use whilst moving around freely and also has a microphone and an earpiece, having a recess for receiving and electrically coupling the removable mobile telephone handset (1; 24; 39; 101; 205; 302).

2. A telephone set as claimed in claim 1, characterized in that the base unit has an adapter for the mobile telephone handset (1; 24; 39; 51; 101; 205; 302) designed as a cradle (8; 25; 40; 53; 105; 205), which is preferably connected to a telephone circuit integrated in the mobile telephone handset (1) by means of signals so as to be capable of assuming the acoustic functions of the mobile telephone handset (1), the microphone of the mouthpiece being specifically designed as a free-speaking microphone (16) and being switchable.

3. A telephone set as claimed in claim 2, characterized in that the holder is designed as a bracket (19; 26; 41; 55), which has a manually releasable locking unit (83) so that the base unit (8; 25; 40; 53) cannot become loose even when in a bracket (19; 26; 41; 55) mounted in a motor vehicle due to the vibrations thereof.

4. A telephone set as claimed in claim 2 or 3, characterized in that the base unit (53) has a slot-in part (69), in particular of a quiver-type design, which can be swung open preferably across 10° to 20°, into which the mobile telephone handset (51) can be partially inserted so that the operating elements (70) of the mobile telephone handset (51) can still be operated.

5. A telephone set as claimed in claim 4, characterised in that the slot-in part (69) can be retained so that the position thereof will be stable when swung into both the open and the closed positions, specifically in order to avoid swinging vibrations if mounted in motor vehicles.

6. A telephone set as claimed in claim 4 or 5, characterised in that the hinge-pin (67) of the quiver-design slot-in part (69) is arranged on the external face of the quiver compartment (71), in particular in the upper half thereof, and the rear wall of the quiver (73) extends up beyond the quiver rim (75) so as to act as a guide plate (72) when the mobile telephone handset (51) is inserted therein.

7. A telephone set as claimed in one of claims 4 to 6, characterised in that the slot-in part (304) can be pivoted by means of a resilient pivoting means (319), braced against the base (303) of the cradle, swinging out from a closed rest position into an open receiving position and, by pushing on the mobile telephone handset (302) received therein against the resilient force of the pivoting means (319), swung back into the closed rest position where it can be secured by means of a retaining holder (322) acting either on it or on the mobile telephone handset (302), a receptacle (323) being formed on the slot-in part (304) or on the base unit (303) which grips underneath and above the mobile telephone handset (302) with some clearance, resilient snap means (337) acting directly through a recess (332) of the slot-in part (304) or indirectly by means of a pressure-transmitting member (336) on the underside of the mobile telephone handset (302) pushing it against the overlapping part (338) of the receptacle (323) when the slot-in part (304) is swung back into the closed rest position, and when the slot-in part (304) is swung open into the receiving position, the resilient snap means (337) does not press against the mobile telephone handset (302) or does so with only a slight pressure so that it (302) can be inserted in and removed from the receptacle (323) without pressure, the snap means preferably comprising at least one compression spring (337), which preferably acts directly or indirectly on the end-part of the mobile telephone handset (302) facing away from the retaining holder (322) and in particular the resilient snap means (337) acts on a moveable pressure-transmitting member formed on or coupled with the slot-in part (304), preferably formed by a thin snap-tongue or snap-plate (336) spray-moulded onto the slot-in part.

8. A telephone set as claimed in one of claims 4 to 7, characterised in that the slot-in part (126) has at least one cantilever unit (129a, 129b) arranged therein to provide the seat for the bottom region of the mobile telephone handset (101) and a receiver for the cantilever unit so that the swinging action of the slot-in part (126) produces a relative movement between the mobile telephone handset bearing-surface (132b) of the cantilever unit (129b) and the upper edge (137) of the slot-in part (126), in particular the front edge region (141) thereof, so that the mobile telephone handset (101) can be readily removed when swung into the open position and is securely retained when swung into the closed position.

9. A telephone set as claimed in claim 8, characterised in that the receiver is arranged fixed in relation to the position of the hinge pin (125) of the slot- in part (126), the mobile telephone handset bearing-surface (132b) of the cantilever unit (129b) extends specifically parallel with the hinge pin (125) and perpendicular to the plane in which the mobile telephone handset (101) lies when in the inserted position and in particular fills almost the entire cross-section of the slot-in part (126) except for the tolerances required in terms of distance for the swinging-action, and the hinge pin (125) of the slot-in part (126) is preferably arranged at the foot region of the cantilever unit (129b) offset to the rear of the bearing-surface (132b) thereof for the bottom part of the mobile telephone handset (101).

10. A telephone set as claimed in one of claims 2 to 9, characterised in that the cradle (105) preferably has a receiving unit for the antenna base or the part of the housing bearing the antenna base, the mobile telephone handset (101) is prevented from falling out of the cradle (105) by means of a retaining holder (119) which automatically spans at least its upper surface area when inserted, and the retaining holder (119) is a spring-biassed slide latch which preferably spans the antenna base or the part of the housing bearing the antenna base of the mobile telephone handset (101) in a secure fit, whereby the retaining holder (119) is preferably manually slidable into the open position, being retained in this position by means of a spring- biassed ram (156) resting in the retaining holder (119), and, for the top surface region (121) of the mobile telephone handset (101), a gripping point (120, 121) is preferably provided for the ram (156), by means of which the latter (156) can be moved out from the rest position by releasing the retaining holder (119) when the mobile telephone set (101) is inserted.

11. A telephone set as claimed in one of claims 2 to 10, characterised in that the cradle (203) has a rigid holder recess (220) to provide a lateral form-fit hold of the bottom edge (221) of the mobile telephone handset and, in the top region (211), a holding unit (230) for the top part of the rear-face of the mobile telephone handset, into which the mobile telephone handset (205) can be inserted in an automatic lock fit and can only be unlocked for removal by means of a releasing device (231), and a dispenser unit (239) is preferably provided to cooperate with the holding unit (230), which, when released, pushes the top part (211) of the mobile telephone handset forward, preferably across an angle of between 5° and 20°, whilst the bottom edge (21) of the mobile telephone set remains in the holder recess (220), so that it can be easily lifted out.

12. A telephone set as claimed in one of claims 1 to 11, characterised by an interface (226) for transmitting signals and power in particular from the cradle (203) to the mobile telephone handset (205), one half of the interface (226) preferably being arranged in the holder recess (220), resiliently mounted so as to float about a hinge pin (227) extending parallel with the cradle floor (223) and perpendicular to the longitudinal extension thereof.

13. A telephone set as claimed one of claims 2 to 12, characterised in that the cradle (8; 25; 53), in particular when the mobile telephone handset (39; 51) is inserted, is designed as a conventional telephone receiver, curved in an arcuate shape, the earpiece and mouthpiece (8.2 resp. 8.1; 35) of the cradle being arranged at the side lying opposite the side having the recess for receiving the mobile telephone handset, and the recess (9; 29) for the mobile telephone handset (1;8) is constructed so that when the mobile telephone handset is inserted therein, the keypad (3; 70) thereof remains accessible.

## Revendications

1. Appareil téléphonique comprenant une monture (19 ; 26 ; 41 ; 55) et un téléphone à main sans fil (1 ; 24 ; 39 ; 101 ; 205 ; 302) qui comprend un microphone (13 ; 35 ; 44; 74 ; 229) et un écouteur, caractérisé par un appareil manuel librement mobile, tenu de façon amovible dans la monture et présentant également un microphone et un écouteur, qui présente une place pour recevoir et pour accoupler sur le plan électrique le téléphone à main sans fil (1 ; 24 ; 39 ; 101 ; 205 ; 302) capable d'être enlevé de lui-même.

2. Appareil téléphonique selon la revendication 1, caractérisé en ce que l'appareil à main présente un adaptateur, réalisé sous forme d'une coquille à main (8 ; 25 ; 40 ; 53 ; 105 ; 205), pour le téléphone à main sans fil (1 ; 24 ; 39 ; 51 ; 101 ; 205 ; 302), ledit adaptateur étant de préférence relié pour ce qui concerne les signaux à un circuit de téléphonie intégré dans le téléphone à main sans fil (1), afin de pouvoir reprendre les fonctions acoustiques du téléphone à mains sans fil (1), et en particulier le microphone du pavillon de prise de son étant réalisé sous forme d'un microphone d'ambiance (16) et commutable.

3. Appareil téléphonique selon la revendication 2, caractérisé en ce que la monture est réalisée sous forme d'une console (19 ; 26 ; 41), laquelle comporte une unité de verrouillage (83) susceptible d'être déverrouillée à la main, afin que l'appareil à main (8 ; 25 ; 40 ; 53) ne puisse pas se détacher sous l'effet des secousses lorsque la console (19 ; 26 ; 41; 55) est montée dans un véhicule.

4. Appareil téléphonique selon l'une ou l'autre des revendications 2 et 3, caractérisé en ce que l'appareil à main (53) comporte une partie d'enfichage (69), capable de basculer sur 10° à 20°, en particulier en forme d'entonnoir, dans laquelle le téléphone à main portable sans fil (51) peut être enfiché partiellement de telle façon que les éléments d'actionnement (70) du téléphone à main sans fil (51) restent accessibles.

5. Appareil téléphonique selon la revendication 4, caractérisé en ce que la partie d'enfichage (69) est maintenue en position stable aussi bien dans la position basculée vers l'extérieur que dans la position basculée vers l'intérieur, afin d'éviter des vibrations de pivotement, en particulier lors du montage dans des véhicules.

6. Appareil téléphonique selon l'une de l'autre des revendications 4 et 5, caractérisé en ce que l'axe de basculement (67) de la partie d'enfichage (69) en forme d'entonnoir est disposé sur la face extérieure de la cavité d'entonnoir (71), en particulier dans sa moitié supérieure, et en ce que la paroi postérieure d'entonnoir (73) est prolongée vers le haut au-delà de la bordure d'entonnoir (75), afin de servir de plaque de guidage (72) pour le téléphone à main sans fil (51) à introduire.

7. Appareil téléphonique selon l'une des revendications 4 à 6, caractérisé en ce que la partie à enfichage (304) est capable de basculer, à l'aide de moyens de basculement élastiques (319) appuyés sur la base (303) de la coque manuelle, depuis une position de repos basculée vers l'intérieur jusque dans une position de réception basculée vers l'extérieur et, par pression sur le téléphone à mains sans fil (302) qu'elle reçoit, elle est capable d'être ramenée dans la position de repos basculée vers l'intérieur à l'encontre de la force élastique des moyens de basculement (319), et d'être arrêtée dans cette position par un moyen de maintien (322) qui attaque soit la partie à enfichage soit le téléphone à main sans fil (302), en ce qu'un socle (323) est formé sur la partie à enfichage (304) ou bien sur la coquille à main (303), ce socle engageant avec jeu par-dessous et par-dessus le téléphone à main sans fil (302), en ce que des organes de pressage élastiques (337) attaquent la face inférieure du téléphone à main sans fil (302) soit directement à travers un évidement (332) de la partie à enfichage (304) soit indirectement par l'intermédiaire d'un organe de transmission de pression (336), et repoussent le téléphone vers la partie en surplomb (338) du socle (323) lorsque la partie à enfichage (304) est ramenée dans la position de repos basculée vers l'intérieur, lesdits organes de pressage élastiques (337), dans la position de réception basculée vers l'extérieur de la partie à enfichage (304), n'exerçant aucune pression ou tout au plus une faible pression sur le téléphone à main sans fil (302) afin que celui-ci puisse être mis en place dans le socle (323) et enlevé sans pression hors de celui-ci, les organes de pressage élastiques étant de préférence formés par au moins un ressort de pressage (337) qui attaque de préférence directement ou indirectement la partie terminale du téléphone à main sans fil (302) détournée des moyens de maintien (322), et en ce que les organes de pressage élastiques (337) agissent en particulier sur un organe de transmission de pression mobile, formé sur la partie à enfichage (304) ou bien articulé sur celle-ci, ledit organe étant de préférence formé par une languette ou une patte de pressage mince (336) formée par injection sur la partie à enfichage (304).

8. Appareil téléphonique selon l'une des revendications 4 à 7, caractérisée en ce que la partie à enfichage (126) comprend au moins une unité à collerette (129a, 129b) agencée dans elle-même, pour déposer la région inférieure du téléphone à main sans fil (101) et un logement pour l'unité à collerette, et en ce que lors du basculement de la partie à enfichage (126) il se produit un mouvement relatif entre la surface d'appui (132b) de l'unité à collerette (129b) pour le téléphone à main sans fil et la bordure supérieure (137) de la partie à enfichage (126), en particulier de sa région de bordure avant (141), grâce à quoi le téléphone à main sans fil (101) est facile à enlever dans la condition basculée vers l'extérieur, et retenu de façon sûre dans la condition basculée vers l'intérieur.

9. Appareil téléphonique selon la revendication 8, caractérisé en ce que le logement est agencé de façon fixe par rapport à la situation de l'axe de basculement (125) de la partie enfichage (126), en ce que la surface de déposition (132b) de l'unité à collerette (129b) pour le téléphone à main sans fil s'étend, dans la condition mise en place, en particulier parallèlement à l'axe de basculement (125) et perpendiculairement au plan de mise en place du téléphone à main sans fil (101), et remplit en particulier approximativement la totalité de la section de la partie à enfichage (126) à l'exception des tolérances d'écartement nécessaires pour le basculement, et en ce que l'axe de basculement (125) de la partie à enfichage (126) est agencé de préférence décalé vers l'arrière par rapport à la surface de déposition (132b) pour la partie inférieure du téléphone à main sans fil (101).

10. Appareil téléphonique selon l'une des revendications 2 à 9, caractérisé en ce que la coquille à main (105) possède de préférence une unité de réception pour le pied de l'antenne, ou bien pour la partie de boîtier qui porte le pied de l'antenne, en ce que le téléphone à main sans fil (101) est retenu de façon sûre à l'encontre d'une chute dans la coque à main (105) avec une sécurité de maintien (119) qui coiffe automatiquement sa zone de surface au moins lors de la mise en place, et en ce que la sécurité de maintien (119) est réalisée sous la forme d'une sécurité à coulisseau chargée par ressort, qui coiffe en le protégeant de préférence le pied de l'antenne ou bien le secteur de boîtier du téléphone à main sans fil (101) qui porte le pied de l'antenne, et la sécurité de maintien (119) étant de préférence déplaçable à la main jusque dans la position d'ouverture, et maintenue dans cette position par un poussoir (156) chargé par un ressort, qui s'enclenche dans la sécurité de maintien (119), et en ce qu'il est de préférence prévu pour une zone de surface (121) du téléphone à main sans fil (101) un emplacement d'attaque (120, 121) pour le poussoir (156), au moyen duquel ledit poussoir (156) est déplaçable hors de la position d'enclenchement et en libérant la sécurité de maintien (119) lors de la mise en place du téléphone à main sans fil (101).

11. Appareil téléphonique selon l'une des revendications 2 à 10, caractérisé en ce que la coquille à main (202) possède un creux d'enfichage rigide (220) pour le maintien latéral en coopération de formes de la bordure inférieure du téléphone à main sans fil (221), et dans la région supérieure (211) une unité de maintien (230) pour la partie supérieure arrière du téléphone à main sans fil, unité de maintien dans laquelle le téléphone à main sans fil (205) est susceptible d'être enfoncé avec verrouillage automatique et ne peut en être déverrouillé pour l'enlèvement qu'au moyen d'un dispositif de déverrouillage (231), et en ce qu'il est de préférence prévu une unité de déploiement (239) qui coopère avec l'unité de maintien (230) et qui repousse de préférence la partie supérieure du téléphone à main sans fil (211) sous un angle entre 5° et 20° pour un bon enlèvement manuel lors du déverrouillage de cette partie supérieure (211) du téléphone à main sans fil tandis que la bordure inférieure (21) de celui-ci demeure dans le creux d'enfichage (220).

12. Appareil téléphonique selon l'une des revendications 1 à 11, caractérisé par une interface (226), en particulier pour la transmission des signaux et de l'énergie depuis la coquille à main (203) jusque dans le téléphone à main sans fil (205), une moitié d'interface (226) étant de préférence agencée avec un maintien flottant élastique dans le creux d'enfichage (220) autour d'un axe de basculement (227) parallèle au fond (223) de la coque et perpendiculaire à son extension longitudinale.

13. Appareil téléphonique selon l'une des revendications 2 à 12, caractérisé en ce que la coquille à main (8 ; 25 ; 53) est réalisée, ou encore incurvée, sous forme d'arc dans le sens d'un combiné téléphonique traditionnel, en particulier conjointement avec le téléphone à main sans fil (39 ; 51) mis en place, et en ce que les pavillons d'écouteur et de microphone (8.2 ou respectivement 8.1; 35) de la coquille à main sont agencés sur le côté opposé au côté qui présente la place pour recevoir le téléphone à main sans fil, et l'évidement (9 ; 29) pour le téléphone à main sans fil (1 ; 8) est réalisé de telle façon que le clavier (3 ; 70) du téléphone à main sans fil reste accessible après sa mise en place.
